# EUROPEAN PATENT SPECIFICATION

(11) **EP 2 096 936 B1**
(45) Date of publication and mention of the grant of the patent: **18.02.2015**
(21) Application number: 07851654.9
(22) Date of filing: 20.12.2007
(51) Int. Cl.: A23D 9/02, A23K 1/16, C11B 3/00, C11C 3/12

(54) **METHOD FOR PREPARING PROCESSED EDIBLE OIL HAVING A HIGHLY ENRICHED BUTTERY FLAVOR AND A VERY LOW CONTENT OF TRANS FATTY ACIDS AND PROCESSED EDIBLE OIL PREPARED BY THE SAME**
VERFAHREN ZUR HERSTELLUNG EINES VERARBEITETEN UND VERZEHRBAREN ÖLS MIT HOCH ANGEREICHERTEM BUTTERGESCHMACK UND SEHR GERINGEM ANTEIL AN TRANS-FETTSÄUREN SOWIE DURCH DAS VERFAHREN HERGESTELLTES VERARBEITETES UND VERZEHRBARES ÖL
PROCÉDÉ PERMETTANT DE PRÉPARER UNE HUILE ALIMENTAIRE TRAITÉE DOTÉE D'UNE SAVEUR BUTYREUSE FORTEMENT ENRICHIE ET D'UNE TRÈS FAIBLE TENEUR EN ACIDES GRAS TRANS, ET HUILE ALIMENTAIRE TRAITÉE PRÉPARÉE À L'AIDE DUDIT PROCÉDÉ

(30) Priority: 29.12.2006 KR 20060137991; 30.07.2007 KR 20070076152
(43) Date of publication of application: 09.09.2009
(73) Proprietor: Industry Academic Cooperation Foundation Of Woosuk University, Jeollabuk-do 565-701 (KR)
(72) Inventor: JUNG, Mun Yhung, Jeonju-si Jeollabuk-do 561-767 (KR); CHOI, Dong-Seong, Jeonju-si Jeollabuk-do 561-816 (KR)
(74) Representative: Hatzmann, Martin
(86) International application number: PCT/KR2007/006688
(87) International publication number: WO 2008/082106

(56) References cited:
- WO-A1-01/98445
- KR-A- 20010 061 219
- KR-B1- 100 342 967
- KR-B1- 100 367 103
- US-A- 3 969 382
- MANGNUS G ET AL: "HYDROGENATION OF OILS AT REDUCED TFA CONTENT" OILS AND FATS INTERNATIONAL, INTERNATIONAL TRADE PUBLICATIONS, REDHILL, GB, 1 July 2004 (2004-07-01), pages 33-35, XP008057233 ISSN: 0267-8853

## Description

### Technical Field

The present invention relates to a novel method for preparing processed edible oil having a highly enriched buttery flavor with a very low level of trans fatty acids and unpleasant smell by performing a deodorization step before the hydrogenation step in the conventional method for preparing hydrogenated vegetable oil and then carrying out an optimized hydrogen addition reaction under mild conditions effective to prevent the hardening of edible oil and the formation of unpleasant smelling compounds instead of the conventional hydrogenation step.

### Background Art

Hydrogenated vegetable oils prepared by conventional hydrogenation methods have been widely used for preparing fast foods, such as margarine, shortening, biscuits, cereal, microwave popcorn, donuts, bread, cake, hamburgers, fried chicken, pizza, chocolate, dairy products, and noodles, because they make fast foods crunchy and appear attractive and improve the flavor of the fast food product by conferring an enriched buttery flavor.

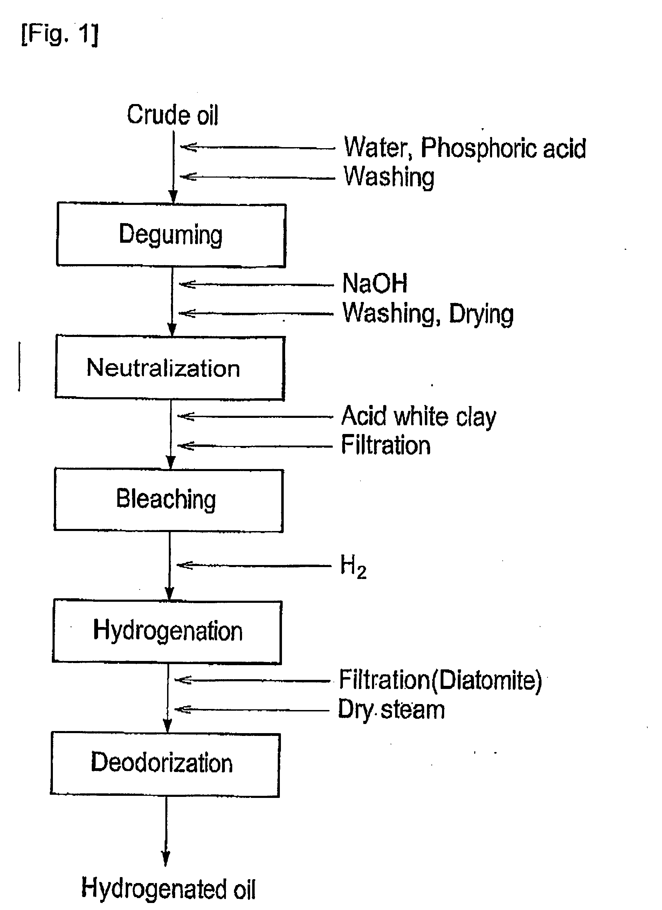

Fig. 1 shows a diagram schematically illustrating methods of preparing and refining hydrogenated vegetable oil that are well-known in the art. The conventional method typically comprises the following five steps: (1) removing gums from the crude vegetable oil extracted by pressure (deguming) step); (2) removing free fatty acids from the oil that has undergone the deguming step (neutralization step); (3) decoloring the neutralized oil using acid clay (bleaching step); (4) hardening the bleached oil by a hydrogenation reaction (hydrogenation step); and (5) finally removing the unpleasant smell from the hydrogenated oil by stripping with dry steam (deodorization step). Optionally, the deguming step or neutralization step may be omitted from the above process.

Since the bleached oil obtained after the bleaching step in the above-described method has a very unpleasant smell originated from crude oil, hydrogenated oil has an unpleasant smell not only due to the hydrogenation reaction but also originating from crude oil. Therefore, in order to use hydrogenated oil for eating, it is very important to remove the unpleasant smell from the hydrogenated oil as much as possible by carrying out the deodorization step. However, since good flavor ingredients are also removed together with the unpleasant smell ingredients during the deodorization step, the final product only contains a very small amount of good flavor ingredients, resulting in a significant deterioration of the savory taste in the final product.

Further, when hydrogen is added to the vegetable oil in the course of preparing hydrogenated oil in a solid form as described above, 10 to 45% of trans-fatty acids is generated. Heavy intake of trans-fatty acids is known to be a major cause for various diseases including obesity. Recently, the relationship between trans-fatty acids and cancer (e.g., liver cancer, stomach cancer, colon cancer, breast cancer and the like) has been discussed. It has been reported that trans-fatty acids are more detrimental to health than saturated fatty acids because trans-fatty acids lower the high density lipoprotein (HDL), i.e., the good cholesterol, which is believed to remove excess cholesterol from arterial plaque and slows it buildup. There have also been other reports on the harmful effects of trans-fatty acids, such as increased risk of diabetes.

Since trans-fatty acids are being discovered to be harmful as described above, Korea, as well as advanced countries including USA, Canada, Denmark, and the like, has begun to strengthen the control on food products with respect to trans-fatty acids by establishing a strict regulation on the trans-fatty acid content in the food product and requiring that the contents of trans-fatty acids and hydrogenated oil be indicated on labels, for example.

Accordingly, a number of domestic and foreign food manufacturers have been putting forth their efforts to develop new technologies for reducing the trans-fatty acid content in food products, especially technologies with respect to the preparation of oil, such as fractionation, hardening, and trans-esterification, the use of natural oil, and the use of emulsifying agents. For instance, by modifying canola oil and sunflower seed oil, an oil having a low content of trans-fatty acids has been developed and is now widely used. In addition, the use of a soybean oil having a low linolenic acid content has been expanded. In Korea, low trans-fatty acid-containing oils (with a trans-fatty acid content of 0.5 g or below per serving size, i.e., a product which can be marked as containing "zero" trans-fatty acids, based on U.S. standards) have been produced by using a chemical esterification method and are currently sold on the market. Further, a processing technique for decreasing the content of trans-fatty acids to a 1% level by utilizing lipolytic enzymes has also been commercialized in Korea and has attracted attention.

However, while the recent technical developments in substitute oil have succeeded in reproducing the crispy texture that hydrogenated vegetable oils provide to food products, the reproduction of buttery flavor which gives the savory and enriched taste to food products has still not been accomplished. Therefore, many food manufacturers have concentrated their efforts to reproduce such a flavor.

U.S. Patent No. 5,783,247 discloses a method for preparing a flavoring composition by subjecting natural glyceride fats, fatty acids, or fatty acid derivatives to an oxidation treatment, which comprises (a) admixing an anti-oxidant to triglyceride fats, fatty acids, or fatty acid derivatives at least to a concentration which is sufficient to increase the induction period of the fat by a factor of 1.5; and (b) heating the mixture for 0.5 hours to 1 week at a temperature ranging from 50 to 150°C under access of atmospheric oxygen and in the presence of water. However, this method is totally distinguishable from the present invention in that it does not achieve the complete reproduction of buttery flavor and there is no mention of an attempt to prevent the generation of trans-fatty acids and unpleasant smell.
WO01/98445 refers to the preparation of a hydrogenated vegetable oil having a reduced hydrogenation odor emission, wherein the vegetable oil is added with an antioxidant, whereby the production of volatile compounds in the vegetable oil is inhibited during the hydrogenation step. The sequence of steps in the method of WO01/98445 corresponds to the summary in Fig. 1, wherein the step of hydrogenation occurs before the step of deodorization.

The present invention is directed to achieving a method for generating an enriched buttery flavor without causing an increase in the trans-fatty acid content and the generation of unpleasant smell and provides a method for producing processed edible oil having an enriched buttery flavor with a very low trans-fatty acid content and unpleasant smell, involving performing a deodorization step before the conventional hydrogenation step in producing hydrogenated vegetable oil and conducting a hydrogen addition reaction under mild conditions effective to prevent the hardening of edible oil and the formation of unpleasant smelling compounds instead of the conventional hydrogenation step.

### Disclosure of Invention

### Technical Problem

Accordingly, the objective of the present invention is to provide a method for preparing processed edible oil having an improved taste, i.e., having an enriched buttery flavor, by first removing the unpleasant smell originating from crude oil and then preventing the generation of trans-fatty acids and unpleasant smell as much as possible during the hydrogenation reaction.

### Technical Solution

One aspect of the present invention relates to a method for producing processed edible oil having a highly enriched buttery flavor with a very low trans-fatty acid content and unpleasant smell, involving performing a deodorization step before the hydrogenation step in the conventional method for preparing hydrogenated vegetable oil comprising the steps of deguming → neutralization → bleaching → hydrogenation → deodorization, and conducting a hydrogen addition reaction under mild conditions effective to prevent the hardening of edible oil and formation of trans fatty acids instead of the conventional hydrogenation hardening step.

Another aspect of the present invention relates to processed edible oil, prepared by the above method of the present invention as substitute oil for hydrogenated vegetable oil, which provides enriched buttery flavor but contains a very low content of trans-fatty acids.

Still another aspect of the present invention relates to a method for improving the taste of food or feed products by adding the above processed edible oil of the present invention to provide enriched buttery flavor without increasing the trans-fatty acid content.

### Advantageous Effects

The method of the present invention provides processed edible oil having highly enriched buttery flavor with a very low content of trans-fatty acids and unpleasant smell by performing a deodorization step before the hydrogenation step and carrying out a hydrogen addition reaction, instead of the conventional hydrogenation hardening step, under mild conditions effective to prevent the hardening of edible oil and the formation of unpleasant smell during reaction. The processed edible oil prepared according to the method of the present invention, even with only a small amount, is capable of providing an enriched buttery flavor to various kinds of edible oil, antioxidant-containing edible oil, low trans-fatty acid-containing oil, food products, and feed products and the like, while lowering the content of trans-fatty acids to a level of zero (0), and is, thus, not only useful as a substitute oil for hydrogenated vegetable oil, but also contributes to the development of the food industry and the improvement of health of mankind.

### Brief Description of the Drawings

The above and other objects and features of the instant invention will become apparent from the following description of preferred embodiments taken in conjunction with the accompanying drawings, in which:
Fig. 1 is a schematic diagram illustrating the conventional method for preparing hydrogenated vegetable oil, which comprises the steps of deguming → neutralization → bleaching → hydrogenation → deodorization;
Fig. 2 is a schematic diagram illustrating a method for preparing processed edible oil according to the present invention, which comprises the steps of deguming → neutralization → bleaching → deodorization → hydrogen addition;
Figs. 3 and 4 show the results of gas chromatography analysis, where the contents of volatile compounds in processed soybean oil prepared according to the method of the present invention and in hydrogenated soybean oil prepared according to conventional methods were analyzed; and
Figs. 5 and 6 show the results of gas chromatography analysis, where the contents of trans-fatty acids in processed soybean oil prepared according to the method of the present invention and in hydrogenated soybean oil prepared according to conventional methods were analyzed.

### Best Mode for Carrying Out the Invention

The present invention provides a method for preparing processed edible oil having an enriched buttery flavor with a low content of trans-fatty acids, which comprises the steps of deodorizing edible oil with steam under reduced pressure in the course of refining the edible oil and then carrying out a hydrogen addition reaction in the presence of a catalyst.

In contrast to the conventional method for manufacturing the hydrogenated vegetable oil, which is typically composed of deguming → neutralization → bleaching → hydrogenation → deodorization where the deodorization step is carried out after the hydrogenation step, the method of the present invention is characterized as a method for providing processed edible oil with a much enhanced flavor involving carrying out the deodorization step, prior to the hydrogenation step, in order to remove the large quantity of volatile microingredients responsible for stimulating and increasing the generation of unpleasant hydrogenation smell, and subsequently carrying out a hydrogen addition reaction, instead of the conventional hydrogenation conditions, under mild conditions effective to prevent the hardening of edible oil, thereby providing a highly enriched buttery flavor while minimizing the generation of unpleasant smell ingredients and trans fatty acids.

Since the processed edible oil prepared according to the method of the present invention has a very strong buttery flavor, it is capable of providing an enriched buttery flavor to food products by adding only a small amount (e.g., 0.1%). Further, even when the processed edible oil of the present invention is added up to 10%, the final content of trans-fatty acids is close to "zero" (0), suggesting that the processed edible oil of the present invention can be useful as a substitute oil for the conventional hydrogenated vegetable oil.

In a preferred embodiment of the present invention, the method for preparing processed edible oil having an enriched buttery flavor and a low trans-fatty acid content according to the present invention may comprise the following steps:
1) deguming crude edible oil;
2) neutralizing the degumed edible oil followed by washing and drying;
3) bleaching the neutralized edible oil;
4) deodorizing the bleached edible oil by stripping with steam under reduced pressure; and
5) introducing hydrogen gas to the deodorized edible oil in the presence of a catalyst at the elevated temperature in a reaction vessel, followed by cooling the mixture, and removing the catalyst.

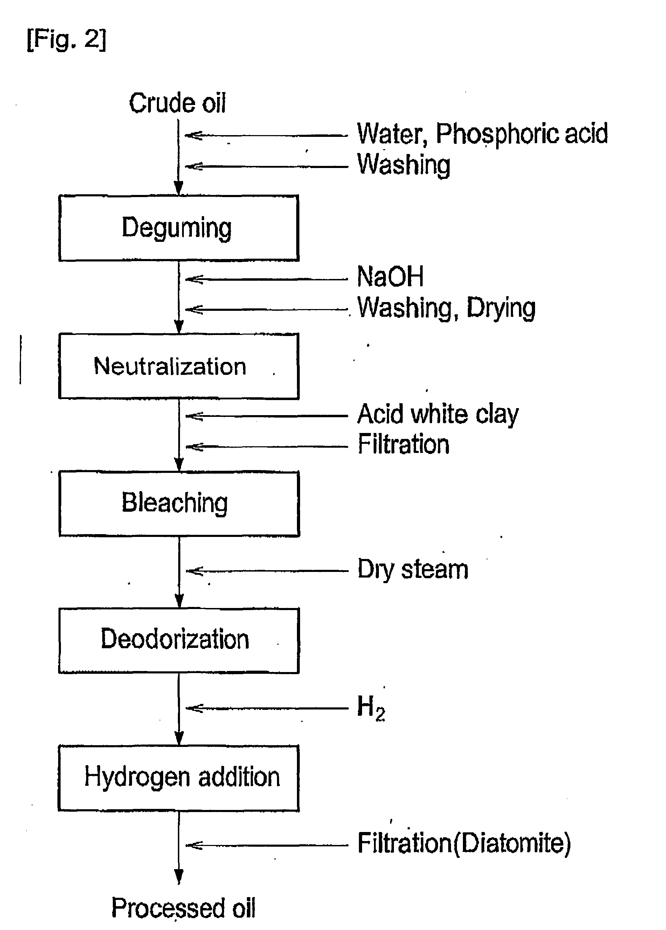

Hereinafter, the above method of the present invention will be described in more detail by referring to Fig. 2.

Step 1) is the deguming step for removing impurities, such as phospholipids, gums, carbohydrates, proteins and the like, from the raw edible oil. In this step, the raw edible oil extracted by pressure is mixed with 0.5 to 2% of water, an aqueous solution of oxalic acid or phosphoric acid, or mixtures thereof, based on the weight of the oil, and stirred at a temperature ranging from 75 to 95°C for 20 min to 1 hour, thereby removing the above-mentioned impurities. In a preferred embodiment of the present invention, the deguming step is carried out by adding 0.5 to 2% of water and 0.1 to 0.3% of phosphoric acid to the edible oil based on the weight of the oil.

Examples of crude edible oils suitable for the method of the present invention include, but are not limited to, soybean oil, corn oil, cottonseed oil, sesame oil, perilla oil, canola oil, sunflower seed oil, rice bran oil, olive oil, rapeseed oil, antioxidant-containing edible oil, low linolenic acid-containing soybean oil, and mixtures thereof. Preferably, soybean oil is used.

The edible oil which has undergone the deguming step contains free fatty acids, which can be removed by the neutralization step, i.e., Step 2). The removal of free fatty acids during this step is achieved by adding sodium hydroxide to the degumed edible oil in the amount of 2 to 20% excess, based on the weight of the oil, washing, and drying the resulting mixture.

The bleaching step (Step 3) is for removing trace elements and pigments, such as chlorophyll and carotene, present in the neutralized edible oil by physical absorption. In one embodiment of the present invention, the above-mentioned trace elements and pigments are removed by physical absorption using acid clay or silica under vacuum, preferably ranging from 1 to 5 mmHg.

Optionally, one or more among Steps 1) to 3), i.e., among the deguming, neutralization, and bleaching steps, may be emitted. Crude edible oil, which has not undergone one or all of Steps 1) to 3), can still be subjected to Steps 4) and 5) to prepare the desired processed edible oil having an enriched buttery flavor and a very low trans-fatty acid content.

The deodorization step (Step 4) is for removing in advance crude oil-originated unpleasant smelling ingredients and volatile impurities that were not removed by the bleaching step and is carried out by spraying dry steam at a temperature ranging from 200 to 280°C to the bleached edible oil for 20 to 60 min, under reduced pressure at a degree of vacuum ranging from 1 to 4 mmHg. Thus, when the deodorization step is carried out before the hydrogenation step and a hydrogen addition reaction is carried out under mild conditions as the last step, a highly enriched buttery flavor can be produced in large quantities while minimizing the generation of unpleasant smell and trans-fatty acids.

The hydrogen addition reaction (Step 5) is for generating an enriched buttery flavor by adding hydrogen gas to the deodorized edible oil in the presence of a catalyst. In this step, after the catalyst is added to the deodorized edible oil, the mixture is stirred at a rate ranging from 50 to 700 rpm and heated to a temperature ranging from 100 to 290°C under reduced pressure ranging from 1 to 6 mmHg, and then hydrogen gas is injected at a pressure ranging from 0 to 2.5 kg/cm² for 7 to 90 min. After the hydrogen addition reaction is completed, the reaction mixture is cooled and filtered to remove the catalyst, thereby producing processed edible oil.

The above hydrogen addition reaction is characterized as injecting hydrogen gas before the reaction temperature reaches the optimal temperature, followed by increasing the reaction temperature to the optimal temperature during the hydrogen addition reaction. Alternatively, the hydrogen addition reaction is characterized as injecting hydrogen gas at a relatively low stirring rate before the reaction temperature reaches the optimal temperature, increasing the reaction temperature until it reaches the optimal temperature, and then increasing the stirring rate during the hydrogen addition reaction at the optimal temperature.

Examples of catalysts suitable for use in the hydrogen addition reaction of the present invention include, but are not limited to, selective or nonselective nickel catalysts, copper catalysts, platinum catalysts, palladium catalysts, and ruthenium catalysts. Preferably, nonselective nickel catalysts are used. The amount of the catalyst added to the hydrogen addition reaction ranges from 0.0025 to 0.5%, preferably from 0.01 to 0.1%, based on the weight of the deodorized edible oil.

Further, the catalyst in Step 5) may be removed by several repetitions of filtration of the reaction mixture, or mixing and filtering the same in the presence of a filter-aid agent. The filter-aid agents can be added in the amount of 0.1 to 0.5% based on the weight of the reaction mixture.
Examples of filter-aid agents include, but are not limited to, active white clay, active carbon, silica, magnesium silicate, and silicic acid.

In a preferred embodiment of the present invention, the hydrogen addition reaction is carried out by the following steps of: heating the reaction mixture under reduced pressure while stirring at a rate of 300 to 700 rpm in the presence of a catalyst in the amount of 0.01 to 0.1% until the reaction temperature reaches 150 to 190°C, injecting hydrogen gas into the reaction mixture maintaining the same stirring rate at a pressure ranging from 0.25 to 2.5 kg/cm², rapidly increasing the reaction temperature to an optimal temperature ranging from 190 to 260°C (more preferably, 230°C) within 5 to 10 min after the beginning of the hydrogen injection, and carrying out the reaction at this optimal temperature for 7 to 90 min.

Further, in another embodiment of the present invention, the hydrogen addition reaction is carried out by the following steps of: heating a reaction mixture under reduced pressure while stirring at a rate of 50 to 150 rpm in the presence of a catalyst in the amount of 0.0025 to 0.5%, until the reaction temperature reaches room temperature to 190°C, injecting hydrogen gas into the reaction mixture at a pressure ranging from 0.25 to 2.5 kg/cm², continuously heating the reaction mixture while maintaining a stirring rate of 50 to 150 rpm, so as to maximally suppress the progression of the hydrogen addition reaction, until the reaction temperature reaches an optimal temperature ranging from 190 to 260°C (more preferably, 230°C), increasing the stirring rate to 200 to 700 rpm (more preferably, 300 rpm), and carrying out the reaction for 7 to 90 min.

Compared to the conventional methods for preparing hydrogenated vegetable oil (see Fig. 1), the most significant technical features of the method according to the present invention are 1) carrying out the deodorization step before the hydrogenation step; and 2) carrying out a hydrogen addition reaction to prepare processed edible oil in a liquid

state where its fluidity is secured at ambient temperature (instead of the hardening of the edible oil) under conditions effective to produce a highly enriched buttery flavor with a savory and enriched taste while minimizing the production of trans-fatty acids. Further, the method of the present invention has the advantage of being capable of regulating the strength of the buttery flavor depending on reaction temperature, reaction time, reaction pressure, the type and amount of the catalyst, stirring rate, and the type of edible oil.

It is well known to those skilled in the art that it has not been possible to prepare an edible oil utilizing the hydrogenation process, where the processed edible oil has an enriched buttery flavor and a low content of trans-fatty acids at the same time. Further, it has been known that crude oil extracted from raw material contains strong unpleasant smelling ingredients and that, during the hydrogenation step, additional unpleasant smelling ingredients are produced along with the buttery flavor. Thus, those skilled in the art would know that, if the hydrogenation step is carried out after the unpleasant smelling ingredients are removed from the edible oil which has undergone the deguming → neutralization → bleaching steps, an additional deodorization step needs to be conducted at a high temperature in order to remove the unpleasant smelling ingredients generated during the hydrogenation step. However, such an additional deodorization step at high temperatures has the problem of not only deteriorating the quality of edible oil but also causing an economical loss. As a result, there has been no attempt to change the order of the hydrogenation and deodorization steps and perform the deodorization step prior to the hydrogenation step with respect to the conventional method for preparing hydrogenated vegetable oil comprising of deguming → neutralization → bleaching → hydrogenation → deodorization. While there have been a few instances where the deguming or neutralization step in the above method was omitted, there have been no attempts to change the conventional method for preparing hydrogenated vegetable oil where it has always been believed that the deodorization step should follow the hydrogenation step.

However, based on the fact that the enriched buttery flavor is generated during the hydrogenation process prior to the generation of unpleasant smell ingredients and that the content of trans-fatty acids generated during the hydrogenation process can significantly change depending on the reaction time and reaction conditions, the present invention provides a method of first removing unpleasant smell ingredients originating from crude oil by deodorizing edible oil prior to the hydrogenation step and, then, carrying out a hydrogen addition reaction under mild conditions effective to prevent the hardening of the edible oil, and the production of unpleasant smelling compounds and trans fatty acids, but to produce highly enriched buttery flavor. The hydrogen addition reaction according to the present invention can be optimized to produce processed edible oil in liquid form, having an enriched buttery flavor while minimizing the generation of trans-fatty acids and unpleasant smell, by completing the reaction before the unpleasant smell ingredients are generated during the process or carrying out the hydrogen addition reaction under conditions of low hydrogen pressure and low stirring rate.

Further, in a conventional hydrogenation process, since hydrogen gas was injected after the optimal reaction temperature was reached, and once the hydrogenation process was initiated, the reaction temperature and stirring rate which were fixed at the time of injecting the hydrogen gas had to be constantly maintained until the hydrogenation was completed, there were no cases where the reaction temperature was increased or the stirring rate was changed after the injection of hydrogen gas. However, the hydrogen addition reaction according to the present invention is characterized as injecting hydrogen gas before the reaction temperature reaches the optimal temperature and increasing the reaction temperature to the optimal temperature during the course of the reaction. Alternatively, the hydrogen addition reaction according to the present invention is characterized as injecting hydrogen gas before the reaction temperature reaches an optimal temperature while maintaining the stirring rate at the lowest and increasing the stirring rate only after the reaction temperature reaches the optimal temperature. Namely, the present invention provides a method for maximizing the production of enriched buttery flavor while minimizing the production of trans-fatty acids and unpleasant smell by changing the reaction temperature and stirring rate to optimal conditions during the course of the hydrogen addition reaction after the hydrogen gas is injected at a low reaction temperature and low stirring rate.

In order to establish the optimal conditions for the hydrogen addition reaction capable of producing processed edible oil having an enriched buttery flavor while minimizing the generation of trans-fatty acids and unpleasant smell, the inventors of the present invention have examined the change in the production of buttery flavor depending on the reaction temperature and reaction time during the hydrogen addition reaction subsequent to the deodorization step. As a result, the amount of trans-fatty acids in the processed soybean oil prepared according to the method of the present invention, where a selective nickel catalyst was used at a reaction temperature ranging from 100 to 230°C, is in the range of from 1.5 to 20.4%, which is significantly lower than the conventional hydrogenated vegetable oil which contains 10 to 45% of trans-fatty acids (see Table 1). Further, the total peak area of volatile compounds increases as the reaction temperature increases, where the total peak area rapidly increases in the early stage of the reaction, reaching the climax within 30 to 45 minutes of reaction time, and then gradually increasing thereafter. The strength of the buttery flavor increases in proportion to the reaction time at a reaction temperature of 150°C and arrives at its maximum between 30 and 45 minutes of reaction time at a reaction temperature of 190 and 230°C. However, after a reaction time of 45 min, unpleasant smell begins to emerge. At a reaction temperature of 260°C, a strong buttery flavor is generated, but a slight unpleasant smell is generated at the early stage of the reaction. Therefore, the optimal temperature for the hydrogen addition reaction for producing enriched buttery flavor while minimizing the generation of unpleasant smell is preferably in the range from 190 to 260°C, more preferably at 230°C. These results suggest that, in order to produce the strongest buttery flavor that can linger on one's tongue for a long time, it is preferable to carry out the hydrogen addition reaction using a selective catalyst at the reaction temperature ranging from 190 to 230°C for 15 to 45 min.

Examination of the production of buttery flavor according to the amount of a catalyst added to the hydrogen addition reaction indicates that it is preferable to add a selective nickel catalyst in the amount of 0.01 to 0.2% (nickel content), more preferably 0.05 to 0.1% (nickel content) based on the weight of the edible oil, which is the most optimal conditions for producing an enriched buttery flavor (see Table 2).

In addition, depending on the type of edible oil used, there are processed edible oils that have weak buttery flavor, generate a strong buttery flavor along with an unpleasant smell, or maintain buttery flavor for only a short time, but most crude edible oils generate a certain level of buttery flavor. In particular, when soybean oil is used, a buttery flavor is generated in the early stage of the reaction where the savory taste can be maintained in the mouth for a long time, indicating that soybean oil is most preferable for generating an enriched buttery flavor (see Table 3).

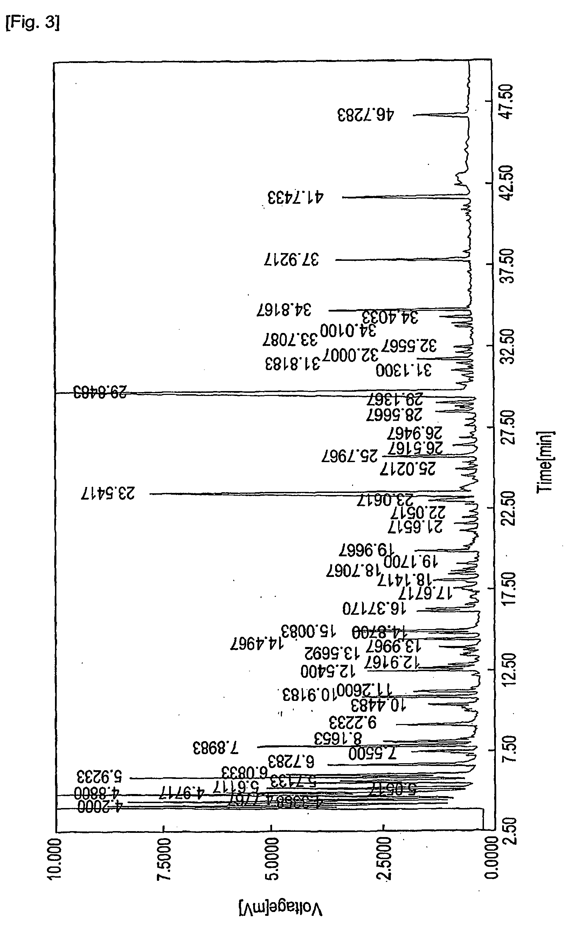

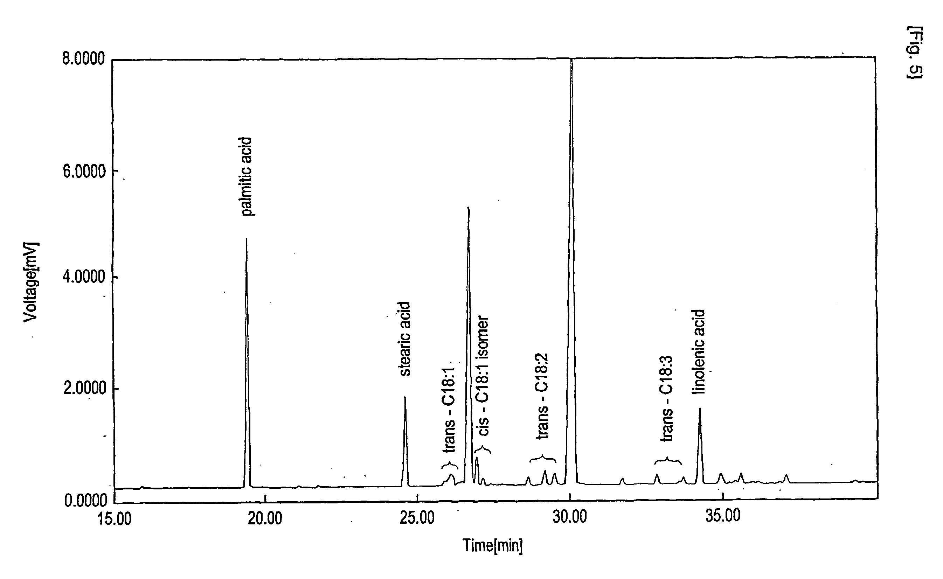

As a result of conducting experiments, based on the above findings, with respect to the generation of buttery flavor and trans-fatty acids when producing processed edible oil by using a nonselective nickel catalyst, it has been found that the use of nonselective nickel catalysts rather than selective nickel catalysts increases the production of buttery flavor while significantly lowering the content of trans-fatty acids. The optimal reaction conditions for producing an enriched buttery flavor, while suppressing the generation of trans-fatty acids in the hydrogen addition reaction using the nonselective nickel catalyst, are as follows: the addition of the nonselective nickel catalyst to the deodorized edible oil in the amount of 0.1 % based on the weight of the oil; when the reaction temperature reaches 150 to 190°C, injecting hydrogen gas to the mixture under a pressure of 0.5 kg/cm² while stirring at 300 rpm; rapidly increasing the reaction temperature to an optimal temperature of 230°C within 5 to 10 min after the beginning of the hydrogen injection; and carrying out the hydrogen addition reaction at this temperature for 90 min, thereby producing the processed soybean oil. As a result, the processed soybean oil prepared under the conditions described above gives out only enriched buttery flavor without generating an unpleasant smell throughout the reaction time. The content of trans-fatty acids in the processed soybean oil was found to be 4.8% (see Fig 5, Table 4), and the total peak area of volatile compounds 761.20 mVxsec (see Fig 3, Table 4). These results obtained by using the nonselective nickel catalyst show the reduced trans-fatty acid content and increased total peak area of volatile compounds as compared to those obtained by using the selective nickel catalyst, suggesting that the nonselective catalyst is superior to the selective catalyst as a catalyst for the mass production of enriched buttery flavor (see Table 2 and 4).

However, in the hydrogen addition reaction according to the above-mentioned conditions, if the time for increasing the reaction temperature from the initial temperature of from 150 to 190°C, at which the hydrogen gas is injected, to the optimal temperature ranging from 190 to 260°C (preferably 230°C) takes a long time, the generation of buttery flavor may occur before the optimal temperature is reached, thereby significantly decreasing the production of buttery flavor during the hydrogen addition reaction. Namely, while it is possible to increase the reaction temperature to the optimal temperature within a short time in a low-volume reactor, the larger the volume of the reactor is, the longer it takes to increase the reaction temperature, resulting in the hydrogen addition reaction being carried out below the optimal temperature, thereby reducing the production of buttery flavor.

In order to solve these problems, the inventors of the present invention have established reaction conditions for the hydrogen addition reaction as follows: while extremely limiting the production of buttery flavor by maintaining a stirring rate of 50 to 150 rpm or less while heating under reduced pressure, injecting hydrogen gas at a temperature ranging from room temperature to 190°C; and then increasing the stirring rate until the reaction temperature reaches an optimal temperature of 230°C to establish the conditions for producing buttery flavor. It has been found that under the conditions established above, the problem of the production of enriched buttery flavor being reduced in a large scale reactor due to the delay in time for increasing the reaction temperature does not exist and that it is possible to prepare processed edible oil in a liquid form, which has a significantly reduced trans-fatty acid content without the unpleasant smell. When the production of buttery flavor was analyzed depending on the amount of the catalyst added to the hydrogen addition reaction, it was shown that it is preferable to use a nonselective catalyst in an amount ranging from 0.0025 to 0.5%, more preferably 0.01 to 0.1% (see Table 5).

It has been found from the above results that, if the hydrogen addition reaction is carried out using a small amount of the nonselective catalyst under a slow stirring rate and low reaction pressure, it is possible to produce processed edible oil in a liquid form, containing highly enriched buttery flavor in quantities without the generation of trans-fatty acids and unpleasant smell (see Table 6). Here, the optimal conditions for the hydrogen addition reaction are found to include starting the injection of hydrogen gas at a temperature of 190°C or below with stirring at 300 to 700 rpm, increasing the reaction temperature to an optimal temperature ranging from 190 to 260°C (preferably 230°C) within 5 to 10 min thereafter, and then performing the hydrogen addition reaction for a long time. Alternatively, the optimal conditions for the hydrogen addition reaction include starting the injection of hydrogen gas at a reaction temperature ranging from room temperature to 190°C, stirring the mixture at 50 to 150 rpm until the reaction temperature reaches an optimal temperature ranging from 190 to 260°C (preferably 230°C), increasing the stirring rate to an optimal rate ranging from 200 to 700 rpm (preferably 300 rpm) when the reaction temperature reaches the optimal temperature, and then performing the hydrogen addition reaction for a long time (see Table 6).

It has been found that, even if the deguming or neutralization step is omitted from the method of the present invention and the edible oil that has only undergone the deodorization step is subjected to the hydrogen addition reaction, the method of the present invention is capable of preparing processed edible oil having the same enriched buttery flavor with the same reduced trans-fatty acid content as processed edible oil prepared by the method including all steps of deguming, neutralization, bleaching, deodorization and hydrogen addition reactions (see Table 7).

The processed soybean oil prepared under the optimal conditions for the hydrogen addition reaction established above provides an enriched buttery flavor and savory taste to the conventional edible oil with the addition of even a small amount (e.g., 0.1%). It has also been found that, even if the processed soybean oil of the present invention is added in the maximum amount of 10%, the content of trans-fatty acids is no larger than 1.9%, which meets the standards for qualifying for trans-fatty acid free. Furthermore, the processed edible oil prepared according to the method of the present invention has an enriched buttery flavor and savory taste 100 times stronger than those of the conventional hydrogenated vegetable oil (see Table 8).

Further, when potato chips, corn chips, fried chicken, coated fried chicken and the like were prepared by using palm oil where processed soybean oil prepared according to the method of the present invention was added, it has been found that the enriched buttery flavor and savory taste of the food products increase and are maintained in the mouth for a long time, while the trans-fatty acid content is reduced (see Table 9).

Since the processed edible oil prepared according to the method of the present invention contains about 100-fold higher content of enriched buttery flavor than that of the conventional hydrogenated vegetable oil, even if it is added in a small amount of 1% or less, it can provide an enriched buttery flavor to the conventional edible oil and reduce its trans-fatty acid content to a zero level. Thus, the processed edible oil according to the present invention is useful as a substitute oil for the conventional hydrogenated vegetable oil.

Since the processed edible oil prepared according to the method of the present invention has an enriched buttery flavor and a significantly low trans-fatty acid level with a good savory taste, it can be directly used as an oil for flying. Further, it can be also added in a small amount to substitute oil prepared by codifying canola oil or sunflower seed oil, low linoleic acid-containing soybean oil, olive oil, soybean oil, palm oil, cottonseed oil, trans-fatty acid lowering oil prepared by various methods, and food products prepared by using the same, so as to provide an enriched buttery flavor and savory taste to them, thereby remarkably improving the properties of food products and oil substitutes for hydrogenated vegetable oil. Suitable amounts for the processed edible oil of the present invention that is being added preferably range from 0.1 to 100%, more preferably, 0.5 to 10%, based on the weight of edible oil, food and feed products. Accordingly, the method according to the present invention and the processed edible oil having an enriched buttery flavor and a significantly low trans-fatty acid level prepared by the same are important inventions that greatly contribute to the development of the food industry and the health of mankind.

### Mode for the Invention

### Examples

The following examples are provided to illustrate embodiments of the present invention but are by no means intended to limit its scope.

### <Test Example 1> Analysis of Trans-fatty Acids and Volatile Compounds in Hydrogenated Vegetable Oil and Processed Edible Oil

In order to analyze the contents of trans-fatty acids and volatile compounds in processed edible oil having an enriched buttery flavor, prepared according to the method of the present invention (Example), and in hydrogenated soybean oil prepared according to conventional methods (Comparative Example), gas chromatography was carried out as follows. The relative content of each ingredient was determined by comparing each ingredient that was measured in the processed edible oil and hydrogenated soybean oil by gas chromatography.

### (1) Gas chromatography for measuring a trans-fatty acid content

The content of trans-fatty acids produced by the hydrogen addition reaction was quantified by gas chromatography, according to the AOCS standard method (The American Oil Chemists Society, AOCS Cel-62, 1990). Specifically, 2 to 6 µℓ of the FAME (fatty acid methyl ester) sample was injected into the injector of a gas chromatography machine equipped with a FID (flame ionization detector). A 100% Cyano column (SP2380, 100 m×0.25 mm, 0.25 *µ*m in thickness, Supelco Inc.) was used for the gas chromatography column, and the sample was injected through a 100:1 split injector. Helium gas having a head pressure of 300 kPa was used as the carrier gas. The temperatures for the injector and the detector were 250°C and 250°C, respectively, and the oven temperature was kept at 170°C for 2 min, followed by an increase to 200°C with a rate of 0.8°C/min according to a temperature gradient method. The peak for trans-fatty acids was identified by comparing the retention time of the sample with that of the trans-fatty acid standard (SIGMA Co.), and the content of the trans-fatty acids was calculated by the ratio of the peak's area.

### (2) Gas chromatography Analysis for Measuring the Content of the Volatile Compounds

Volatile compounds were concentrated from the processed edible oil and hydrogenated edible oil by using the solid phase microextraction (SPME) method and were then separated by gas chromatography. The fiber used in the above method was a 75 mm Carboxen-PDMS. First, 2 g of sample was placed in a 30 mℓ serum bottle and was sealed with a silicon-lined rubber septa and an aluminum cap for the absorption of volatile compounds. The above serum bottle was heated on a heating plate for 10 min and the 75 mm Carboxen-PDMS fiber was poured into the serum bottle, where the volatile compounds were absorbed to the fiber for 10 min. The Carboxen-PDMS fiber to which the volatile compounds absorbed was attached to the injector (250°C) of the gas chromatograph for 2 min, detached therefrom, and injected into the gas chromatograph (Shimadzu GC 14-B, Shimadzu, Tokyo, Japan). Here, the oven temperature of the gas chromatograph was constantly maintained at a constant temperature of 45°C for 1 min, until being increased to 160°C at a rate of 4°C/min. The column used in the gas chromatography analysis was a capillary column (Supelcowax 0.25 mm 60 m, Supelco), and helium was used as the carrier gas. A FID detector was used to calculate the analyzed peak area, where the detection temperature was 260°C and the peak area was represented in mVxsec.

### <Comparative Example 1> Analysis of the Hydrogenated Vegetable Oil

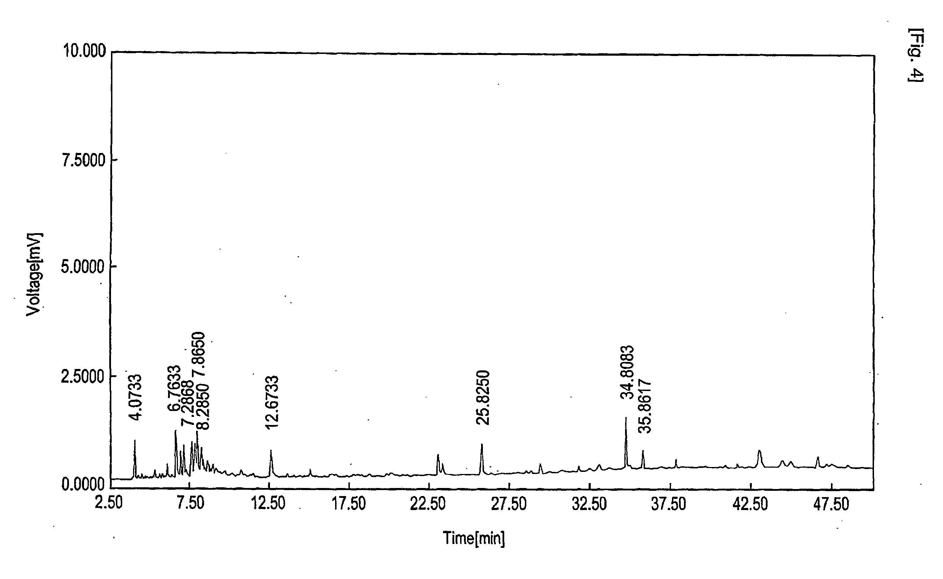

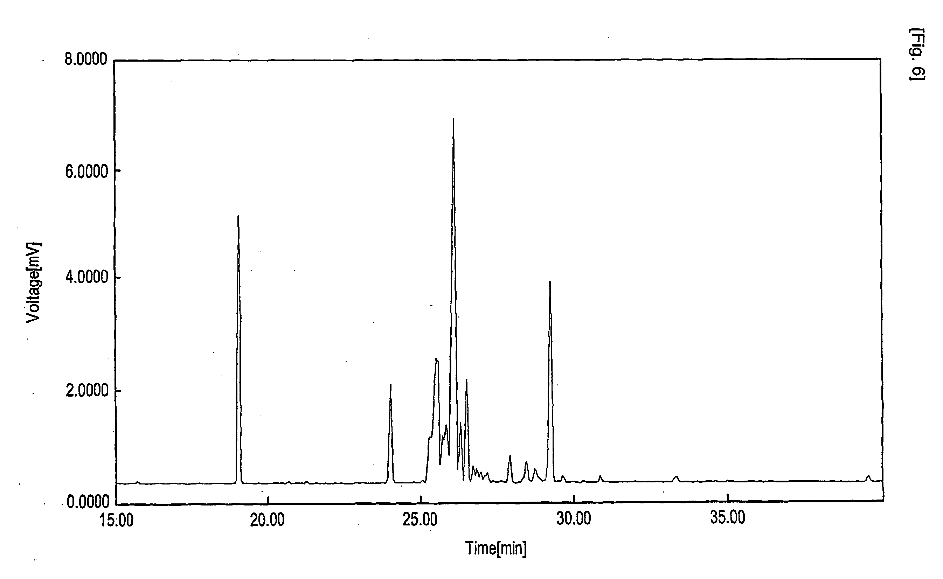

Hydrogenated soybean oil, which was prepared according to conventional methods and sold on the market was employed as a control. The contents of trans-fatty acids and volatile compounds in the hydrogenated soybean oil were analyzed by gas chromatography as described in Test Example 1, where each gas chromatogram obtained from the analysis is shown in Figs. 4 and 6, respectively, and the trans-fatty acid content, the total peak area of the volatile compounds, the strength of the buttery flavor, and the sensory test results are shown in Table 1.

As a result, the content of trans-fatty acids in the hydrogenated vegetable oil used as the control was 30.2%, the total peak area of the volatile compounds was 28.80 mV×sec, and the buttery flavor of the hydrogenated vegetable oil was very weak.

### <Example 1> Production of Buttery Flavor According to Various Reaction Temperatures and Reaction Times in the Hydrogen Addition Reaction Performed After Deodorization

The deguming, neutralizing, and bleaching steps of soybean oil were carried out according to the same method for preparing hydrogenated vegetable oil, which is briefly described as follows. Crude soybean oil extracted was subjected to deguming by mixing with 0.3% phosphoric acid solution based on the weight of the soybean oil and stirring at 85°C for 30 min, to remove impurities including phospholipids, gums, carbohydrates, proteins, and the like. The degumed soybean oil was neutralized by adding 0.3% excess sodium hydroxide (20 baume) based on the weight of the soybean oil, thereby removing free fatty acids, followed by washing with water and drying at 105°C. The neutralized soybean oil was mixed with 0.8% acid clay based on the weight of the soybean oil and subjected to physical absorption under vacuum (10 mmHg) for 30 min, to remove pigments and other microelements. After the bleached soybean oil was deodorized at 250°C under reduced pressure, the deodorized soybean oil was mixed with a 0.1% selective nickel catalyst (9908, Synetix) based on the weight of the soybean oil and heated with stirring at a rate of 300 rpm. When the reaction temperature reached 100, 150, 190, 230, 260, and 290°C, respectively, hydrogen gas was injected to the mixture at a pressure of 0.5 kg/cm² and reacted at each temperature for 0, 7, 15, 30, 45, and 60 min, respectively, while stirring at a rate of 300 rpm. After the reaction was completed, the reaction mixture was cooled to 50 to 150°C, followed by filtering to remove the catalyst, thereby obtaining processed soybean oil containing a buttery flavor. The content of trans-fatty acids, the total peak area of volatile compounds, and the strength of the buttery flavor of the processed soybean oil were analyzed, and a sensory test was conducted. The results are shown in Table 1 below.

Table 1

**[Table 1]**

| Reaction Temp. (°C) | Reaction Time (min) | Trans-fatty Acid Content (g/100 g oil) | Total Peak Area (mV×sec) | Strength of Buttery Flavor ¹⁾ | Remarks |
|---|---|---|---|---|---|
| 100 | 0 | 1.4 | 11.10 | - | |
| | 15 | 1.7 | 23.17 | - | |
| | 30 | 1.6 | 25.37 | + | |
| | 45 | 1.7 | 18.40 | + | |
| | 60 | 1.5 | 14.25 | - | |
| 150 | 15 | 1.5 | 153.04 | + | |
| | 30 | 1.6 | 171.29 | +++ | |
| | 45 | 1.6 | 155.60 | +++ | |
| | 60 | 1.6 | 188.29 | ++++ | |
| 190 | 15 | 1.7 | 226.50 | +++ | |
| | 30 | 4.1 | 241.28 | +++++ | Savory taste is maintained in the mouth for a long time |
| | 45 | 7.0 | 259.50 | ++++ | There is a weak unpleasant smell. |
| | 60 | 11.6 | 301.53 | ++++ | There is a strong unpleasant smell. |
| 230 | 7 | 3.2 | 233.23 | ++ | |
| | 15 | 6.0 | 301.84 | +++ | |
| | 30 | 12.2 | 413.36 | +++++ | Savory taste is maintained in the mouth for a long time. |
| | 45 | 17.0 | 498.52 | +++++ | There is an unpleasant smell. |
| | 60 | 20.4 | 596.23 | ++++ | There is a strong unpleasant smell. |
| 260 | 15 | 11.7 | 578.27 | +++ | There is a weak unpleasant smell. |
| | 30 | 16.9 | 1109.44 | ++++ | There is a slightly strong unpleasant smell. |
| | 45 | 22.1 | 1171.94 | ++++ | There is a strong unpleasant smell. |
| | 60 | 26.3 | 1772.29 | ++++ | There is a strong unpleasant smell. |
| 290 | 7 | 12.1 | 785.63 | +++ | There is a weak unpleasant smell. |
| | 15 | 18.1 | 1169.34 | ++++ | There is an unpleasant smell and catalyst taste. |
| | 30 | 24.0 | 1418.60 | +++++ | There is a strong unpleasant smell and catalyst taste. |
| | 45 | 27.3 | 1661.03 | ++++ | There is a strong unpleasant smell and catalyst taste. |
| | 60 | 33.7 | 1739.94 | ++++ | There is a strong unpleasant smell and catalyst taste. |
| Comp. Ex. 1 | - | 30.2 | 28.80 | ++ | |

| | | | | | |
|---|---|---|---|---|---|
| ¹⁾ Strength of buttery flavor: - absent, + very weak, ++ weak, +++ medium, ++++ slightly strong, +++++ strong, ++++++ very strong | | | | | |

As shown in Table 1, the trans-fatty acid content of the processed soybean oil prepared at a reaction temperature ranging from 150 to 230°C according to the method of the present invention was in the range of 1.5 to 20.4%. This result suggests that, even if the processed soybean oil of the present invention is added to edible oil, food products, and feed products in a small amount (e.g., 2%), the trans-fatty acid content of the final product is very low, i.e., 0.03 to 0.41%. The trans-fatty acid content of the processed soybean oil was not more than 1/74 as compared with that of the hydrogenated soybean oil of Comparative Example 1, which is an extremely small quantity that satisfies the zero trans-fatty acid requirement defined in the food industry. Further, the total peak area of volatile compounds increased as the reaction temperature was increased. In particular, the total peak area of volatile compounds rapidly increased at the early stage of the reaction, then reached the maximum within 30 to 45 min of reaction time, and after that, increased gradually. While the strength of buttery flavor increased as time progressed at the reaction temperature of 150°C, it was the strongest between 30 and 45 min of reaction time at a reaction temperature of 190°C and 230°C, and an unpleasant smell started to emerge after 45 min. Further, at a reaction temperature of 260°C and 290°C, an unpleasant smell was generated from the early stage of the reaction, resulting in the offsetting of the buttery flavor. Thus, it was found that the production of buttery flavor decreased when the reaction temperature was decreased below 150°C, while the production of volatile compounds responsible for the unpleasant smell increased when the reaction temperature was increased above 260°C. These results suggest that it is preferable to maintain a reaction temperature ranging from 190 to 260°C for the production of buttery flavor which is the strongest and leaves a savory taste in the mouth for a long time. More preferably, the hydrogen addition reaction is carried out for 15 to 30 min at a reaction temperature ranging from 190 to 230°C.

### <Example 2> Production of Buttery Flavor According to Various Amounts of Catalyst Added in the Hydrogen Addition Reaction Performed After Deodorization

The deodorized soybean oil, obtained by carrying out the deguming, neutralizing, bleaching, and deodorizing steps according to the same method as described in Example 1, was mixed with a selective nickel catalyst (9908) in various amounts, i.e., 0.025, 0.1, 0.2, and 0.5% (nickel content) based on the weight of the soybean oil, and heated under reduced pressure. When the reaction temperature reached 230°C, hydrogen gas was injected into the mixture at a pressure of 0.5 kg/cm² and reacted for 0, 7, 15, 30, 45, and 60 min, respectively and stirred at a rate of 300 rpm. After the reaction was completed, the reaction mixture was filtered to obtain processed soybean oil containing a buttery flavor. The content of trans-fatty acids, the total peak area of volatile compounds and the strength of the buttery flavor of the processed soybean oil were analyzed, and a sensory test was conducted. The results are shown in Table 2 below.

Table 2

**[Table 2]**

| Amount of Catalyst (wt%) | Reaction Time (min) | Content of Trans-fatty Acid (g/100g oil) | Total Peak Area (mV×sec) | Strength of Buttery Flavor¹⁾ | Remarks |
|---|---|---|---|---|---|
| 0.025 | 0 | - | - | - | |
| | 7 | 2.4 | 416.47 | +++ | |
| | 15 | 3.8 | 455.03 | ++++ | There is a weak unpleasant smell. |
| | 30 | 7.7 | 465.50 | +++ | |
| | 45 | 10.2 | 485.28 | ++ | |
| | 60 | 14.5 | 523.45 | +++ | There is a strong unpleasant smell. |
| 0.1 | 7 | 3.2 | 233.23 | ++ | |
| | 15 | 6.0 | 301.84 | ++++ | |
| | 30 | 12.2 | 413.36 | +++++ | There is no unpleasant smell and it is very tasty. |
| | 45 | 17.0 | 498.52 | ++++ | There is an unpleasant smell. |
| | 60 | 20.4 | 596.20 | +++ | There is a strong unpleasant smell. |
| 0.2 | 7 | 2.1 | 313.68 | ++ | There is a weak unpleasant smell. |
| | 15 | 5.2 | 377.56 | +++ | There is a slightly strong unpleasant smell. |
| | 30 | 9.0 | 541.32 | ++++ | There is a strong unpleasant smell. |
| | 45 | 13.9 | 585.05 | +++ | There is a strong unpleasant smell. |
| | 60 | 17.2 | 643.25 | +++ | There is a strong unpleasant smell. |
| 0.5 | 7 | 2.3 | 328.95 | ++ | There is a weak unpleasant smell. |
| | 15 | 4.9 | 425.11 | ++ | There is a weak unpleasant smell. |
| | 30 | 10.9 | 594.08 | ++ | There is a slightly strong unpleasant smell. |
| | 45 | 14.3 | 679.26 | +++ | There is a strong unpleasant smell. |
| | 60 | 17.5 | 738.67 | ++ | There is a strong unpleasant smell and rancid small. |

| | | | | | |
|---|---|---|---|---|---|
| ¹⁾Strength of buttery flavor: - absent, + very weak, ++ weak, +++ medium, ++++ slightly strong, +++++ strong, ++++++ very strong | | | | | |

As shown in Table 2, when the hydrogen addition reaction was carried out for 30 min by using the selective nickel catalyst (9908) in the amount of 0.1 % (nickel content), the production of the enriched buttery flavor was maximized. When the selective nickel catalyst was added in the amount of 0.2% and 0.5%, however, an unpleasant smell was generated from the early stage of the reaction, resulting in an unsatisfactory buttery flavor. These results suggest that the amount of a selective nickel catalyst (9908) is preferably in the range from 0.025 to 0.1 % (nickel content), more preferably 0.1% based on the weight of the soybean oil.

### <Example 3> Production of Buttery Flavor According to Various Types of Crude Edible Oil Used in the Hydrogen Addition Reaction After Deodorization

Each of the deodorized soybean oil, cottonseed oil, corn oil, and canola oil obtained by carrying out the deguming, neutralizing, bleaching, and deodorizing steps according to the same method as described in Example 1 was mixed with a nonselective nickel catalyst (N545, Engelhard) in the amount of 0.2% based on the weight of the oil and heated while stirring at a rate of 700 rpm under reduced pressure. When the reaction temperature reached 190°C, hydrogen gas was injected under a pressure of 1.5 kg/cm² while maintaining a stirring rate of 700 rpm, and the mixture was reacted for 0, 10, 20, 30, and 40 min, respectively. After the reaction was completed, the reaction mixture was filtered to obtain processed soybean oil containing a buttery flavor. The content of trans-fatty acids, the total peak area of volatile compounds, and the strength of the buttery flavor of the processed soybean oil were analyzed, and a sensory test was conducted. The results are shown in Table 3 below.

Table 3

**[Table 3]**

| Type of Crude Edible Oil | Reaction Time (min) | Content of Trans-fatty Acids (g/100 g oil) | Total Peak Area (mV×sec) | Strength of Buttery Flavor¹⁾ | Remarks |
|---|---|---|---|---|---|
| Canola oil | 0 | 2.5 | 8.28 | - | |
| | 10 | 2.1 | 211.63 | ++ | There is a weak unpleasant smell. |
| | 20 | - | 360.89 | ++ | There is an unpleasant smell. |
| | 30 | 23.6 | 452.16 | ++ | There is a strong unpleasant smell. |
| | 40 | 13.3 | 450.21 | + | There is a strong unpleasant smell. |
| Corn oil | 0 | 0.9 | 4.35 | - | |
| | 10 | 4.3 | 389.58 | +++ | |
| | 20 | - | 464.24 | ++++ | |
| | 30 | 24.3 | 502.48 | ++ | There is a strong unpleasant smell, and the savory taste is rapidly disappeared in the mouth. |
| | 40 | 31.4 | 561.26 | ++ | There is a strong unpleasant smell, the savory taste rapidly disappears in the mouth, and the aftertaste is bitter. |
| Cottonseed oil | 0 | 0.9 | 15.33 | - | |
| | 10 | 7.0 | 438.99 | + | |
| | 20 | - | 495.73 | ++ | |
| | 30 | 17.3 | 547.62 | ++ | There is an unpleasant smell and the savory taste rapidly disappears in the mouth. |
| | 40 | 26.9 | 570.19 | + | There is an unpleasant smell and the savory taste rapidly disappears in the mouth. |
| Soybean oil | 0 | 1.4 | 11.10 | - | |
| | 10 | 5.8 | 501.47 | +++ | The savory taste is maintained for a long time in the mouth. |
| | 20 | 12.8 | 571.87 | +++++ | The savory taste is maintained for a long time in the mouth. |
| | 30 | 20.5 | 582.63 | +++++ | There is a weak unpleasant smell. |
| | 40 | 30.0 | 602.80 | +++ | There is a strong unpleasant smell, and the savory taste is not rich and the aftertaste is bitter. |

| | | | | | |
|---|---|---|---|---|---|
| ¹⁾Strength of buttery flavor: - absent, + very weak, ++ weak, +++ medium, ++++ slightly strong, +++++ strong, ++++++ very strong | | | | | |

As illustrated in Table 3, when canola oil was used, the buttery flavor was weak and an unpleasant smell was generated from the early stage of the reaction. The use of corn oil provided a strong buttery flavor at a reaction time of 20 min, but also generated an unpleasant smell after a reaction time of 30 min, resulting in the offsetting of the buttery flavor and quick disappearance of the savory taste in the mouth. The buttery flavor of cottonseed oil was weak and rapidly disappeared in the mouth, similar to the corn oil. On the other hand, in the case of soybean oil, a buttery flavor was generated starting from a reaction time of 10 min, leaving a savory taste in the mouth for a long time. The production of buttery flavor for soybean oil was maximized during 20 to 30 min of reaction time, and after a reaction time of 30 min, a slightly unpleasant smell was generated. These results suggest that the most preferable edible oil for producing buttery flavor according to the method of the present invention is soybean oil.

### <Example 4> Establishment of Optimal Reaction Conditions for the Production of Buttery Flavor by Regulating the Reaction Temperature in the Hydrogen Addition Reaction

In order to establish the optimal reaction conditions for producing a high concentration of buttery flavor while preventing the generation of trans-fatty acids, the following experiments were conducted based on the results from Examples 1 to 3.

The deodorized soybean oil obtained by carrying out the deguming, neutralizing, bleaching, and deodorizing steps according to the same method as described in Example 1 was mixed with a nonselective nickel catalyst (N545, Engelhard) in the amount of 0.1% based on the weight of the oil and heated while stirring at a rate of 300 rpm under reduced pressure. When the reaction temperature reached 150 to 190°C, hydrogen gas was injected at a pressure of 0.5 kg/cm², and, thereafter, the reaction temperature was increased up to the optimal temperature of 230°C within 5 to 10 min. When the reaction temperature reached 230°C, the hydrogen reaction addition was carried out for 90 min and the reaction mixture was filtered to obtain processed soybean oil having a rich buttery flavor with a very low content of trans-fatty acids and little unpleasant smell. The content of trans-fatty acids, the total peak area of volatile compounds, the strength of the buttery flavor, and the iodide value (IV) of the processed soybean oil were analyzed, and a sensory test was conducted. The results are shown in Table 4 below. The iodide value was measured according to the AOAC method (Cd 1c-85).

Table 4

**[Table 4]**

| | Reaction Time (min) | Content of Trans-fatty Acids (g/100 g oil) | Total Peak Area (mV×sec) | Strength of Buttery Flavor¹⁾ | IV (Iodide value) | Remarks |
|---|---|---|---|---|---|---|
| Ex. 4 | 0 | 1.4 | 11.09 | - | 131.6 | |
| | 7 | 1.4 | - ²) | ++ | 130.0 | It has a savory taste. |
| | 15 | 1.7 | 457.25 | +++ | 128.8 | It has a savory taste. |
| | 30 | 3.1 | 643.05 | +++++ | 127.3 | It has a strong savory taste. |
| | 45 | 3.5 | - ²⁾ | +++++ | 125.4 | It has a strong savory taste. |
| | 60 | 4.8 | 761.20 | ++++++ | 125.0 | There is no unpleasant smell and it has a strong savory taste. |
| | 90 | 6.3 | 803.36 | ++++++ | 124.5 | There is no unpleasant smell and it has a strong savory taste. |
| Comp. Ex.2 (N₂) | 30 | 1.4 | 264.64 | + | 131.5 | There is an unpleasant and grassy smell. |
| | 60 | 1.4 | 283.50 | + | 131.5 | There is a strong, unpleasant and grassy smell. |
| Comp. Ex.2 (Air) | 30 | 1.4 | -²⁾ | + | 131.6 | There is an unpleasant smell. |
| | 60 | 1.4 | - ²⁾ | ++ | 131.3 | There is a strong unpleasant and grassy smell. |
| Comp. Ex.2 (reduced pressure) | 30 | 1.4 | 420.27 | + | 131.6 | There is an unpleasant smell. |
| | 60 | 1.4 | 397.34 | ++ | 131.4 | There is a strong unpleasant and grassy smell. |

| | | | | | | |
|---|---|---|---|---|---|---|
| ¹⁾ Strength of buttery flavor: - absent, + very weak, ++ weak, +++ medium, ++++ slightly strong, +++++ strong, ++++++ very strong ²⁾- : the total peak area is not measured | | | | | | |

As illustrated in Table 4, the processed soybean oil produced under the conditions as described above did not have any unpleasant smell, even after a reaction time of 45 min, and gave out only a rich buttery flavor and savory taste. After a reaction time of 60 min, the content of trans-fatty acids was 4.8% (Fig. 5), and the total peak area of volatile compounds was 761.20 mV×sec (Fig 3). When these results were compared with the experimental group (trans-fatty acid content: 12.2%, and total peak area of volatile compounds: 4:13.36 mV×sec) which was reacted under conditions suitable for the production of the richest buttery flavor in Example 1, i.e., under the following conditions: 0.1% of nonselective nickel catalyst 9908, a pressure of 0.5 kg/cm², a stirring rate of 300 rpm, a reaction temperature of 23°C, and 30 min of reaction time, the content of trans-fatty acids was lowered by 2.5-fold and there was no unpleasant smell, while the total peak area of volatile compounds was increased by 1.84-fold. These results suggest that a nonselective catalyst is superior to a selective catalyst as a catalyst for producing only rich buttery flavor in a large quantity. Further, when the content of trans-fatty acids and total peak area of volatile compounds of the processed soybean oil prepared as described in this Example with those of the experimental group (trans-fatty acid content: 20.5%, and total peak area of volatile compounds: 582.63 mVxsec) prepared under the most optimal conditions in Example 3, i.e., 0.2% of a nonselective nickel catalyst N545, a pressure of 1.5 kg/cm², a reaction temperature of 190°C, a stirring rate of 700 rpm, and 30 min of reaction time, the content of the trans-fatty acids was lowered by 4.3-fold and there was no unpleasant smell, while the total peak area of volatile compounds was increased by 1.31-fold. It has been confirmed from the above results that the most optimal conditions for the producing enriched buttery flavor in large quantities are as follow: injecting hydrogen gas at a reaction temperature of 190°C or below in the presence of a small amount of a nonselective catalyst under a slow stirring rate and a low reaction pressure; rapidly increasing the reaction temperature to 190 to 260°C (more preferably 230°C) within 5 to 10 min after the injection; and then carrying out the reaction slowly for a long time at that temperature. Further, although the hydrogen addition reaction was carried out for 90 min according to the method described in Example 4, there was little change in the iodide values of soybean oil between prior to the reaction (131.6) and after the reaction (124.5), confirming that the processed soybean oil has the characteristics of a pure liquid which does not harden (Table 4).

### <Comparative Example 2>

The deguming, neutralization, bleaching, and deodorization steps were carried out on the soybean oil according to the same method as described in Example 1. The resulting deodorized soybean oil was applied with nitrogen gas or air instead of hydrogen gas, or under reduced pressure (0 kg/cm² of hydrogen pressure) in the presence of a nonselective nickel catalyst (N545, 0.2% nickel content) at 230°C for 30 min and 60 min respectively, while stirring at 300 rpm, to obtain processed soybean oil having a buttery flavor. The content of trans-fatty acids, the total peak area of volatile compounds, and the strength of the buttery flavor of the processed soybean oil were analyzed, and a sensory test was conducted. The results are shown in Table 4 above.

As shown in Table 4, the total peak area of volatile compounds of the processed soybean oil prepared as described in this Example, i.e., Comparative Example 2, was 0.35- to 0.52-fold smaller than that of the processed soybean oil prepared in Example 4 (reaction time of 60 min), and the content of trans-fatty acids was 1.4%, which was identical to or somewhat lower than that of the processed soybean oil prepared in Example 4. However, the buttery flavor of the processed soybean oil prepared as described in this Example was very weak and there was a strong unpleasant smell. These results confirmed that even if the reaction is carried out under the optimal conditions with respect to catalyst, reaction pressure, stirring rate, and reaction temperature, little rich buttery flavor is generated in the processed edible oil, without the addition of hydrogen gas. These results also showed that even if the reaction is carried out under the optimal conditions in the presence of catalyst, strong unpleasant smelling compounds was generated in the processed edible oil even at the early stage of reaction, without addition of hydrogen gas. These results suggested that hydrogen gas should be applied to the oil at the lowest possible temperature before it reached the optimal temperature to prevent the formation of unpleasant smelling compounds.

### <Example 5> Production of Buttery Flavor According to Various Amounts of the Nonselective Catalyst Under Optimal Reaction Conditions in the Hydrogen Addition Reaction

In order to examine the change in the production of buttery flavor according to various amounts of the nonselective catalyst under the optimal reaction conditions for the production of buttery flavor established in Example 4, the following experiment was carried out. First, the deodorized soybean oil obtained by carrying out the deguming, neutralizing, bleaching, and deodorizing steps according to the same method as described in Example 1 was mixed with a nonselective nickel catalyst (N545, Engelhard) in the amount ranging from 0.0025 to 0.1% (nickel content) based on the weight of the oil and heated while stirring at a rate of 150 rpm. When the reaction temperature reached 150 to 190°C, hydrogen gas was injected at a pressure of 0.5 kg/cm², and the reaction temperature was increased to the optimal temperature of 230°C while slowly stirring at a rate ranging from 50 to 150 rpm. After that, the stirring rate was increased to 300 rpm at 230°C, and the reaction was further carried out for 45 min. The reaction mixture was then cooled and filtered to obtain the processed soybean oil having a rich buttery flavor with a very low level of trans-fatty acids and no unpleasant smell. The content of trans-fatty acids, the total peak area of volatile compounds, the strength of the buttery flavor, and iodide values (IV) of the processed soybean oil were analyzed, and a sensory test was conducted. The results are shown in Table 5 below.

Table 5

**[Table 5]**

| Example | Amount of N545 Added (%) | Reaction Time (min) | Content of Trans-fatty Acids (g/100 g oil) | Total Peak Area (mV×sec) | Strength of Buttery Flavor ¹⁾ | IV (iodide value) | Remarks |
|---|---|---|---|---|---|---|---|
| 5 | 0.0025 | 45 | 2.9 | ²⁾ | ++ | 129.9 | It has a savory taste. |
| | 0.005 | 45 | 3.2 | 295.47 | +++ | 129.6 | It has a savory taste. |
| | 0.01 | 45 | 3.6 | - ²⁾ | ++++ | 128.1 | It has a strong savory taste. |
| | 0.02 | 45 | 3.6 | 315.89 | +++++ | 128.0 | It has a strong savory taste. |
| | 0.03 | 45 | 3.7 | 363.23 | ++++++ | 128.5 | It has a strong savory taste. |
| | 0.04 | 45 | 3.8 | 411.90 | ++++++ | 127.6 | It has a strong savory taste. |
| | 0.05 | 45 | 3.1 | -²⁾ | ++++++ | 129.4 | It has a strong savory taste. |
| | 0.07 | 45 | 2.5 | 419.44 | ++++++ | 129.3 | It has a strong savory taste. |
| | 0.1 | 45 | 3.4 | ²⁾ | +++++ | 128.4 | It has a strong savory taste. |
| | 0.2 | 45 | 3.4 | - ²⁾ | +++++ | 128.5 | It has a strong savory taste. |
| | 0.5 | 45 | 3.6 | ²⁾ | ++++ | 128.0 | It has a strong savory taste. |
| 4 | 0.1 | 45 | 3.5 | - ²⁾ | +++++ | 125.4 | It has a strong savory taste. |

| | | | | | | | |
|---|---|---|---|---|---|---|---|
| ¹⁾Strength of buttery flavor: - absent, + very weak, ++ weak, +++ medium, ++++ slightly strong, +++++ strong, ++++++ very strong ²⁾ - : the total peak area is not measured | | | | | | | |

As can be seen in Table 5, when hydrogen gas was injected at a temperature of 190°C or below and the reaction mixture was heated while maintaining a stirring rate of 50 to 150 rpm until the reaction temperature reached 230°C, an enriched buttery flavor was generated even though the nonselective nickel catalyst (N545) was added in a very small amount (i.e., 0.0025%). When 0.03% of the nonselective nickel catalyst was added under the above conditions, processed edible oil having the maximum strength of buttery flavor with no unpleasant and grassy smell was obtained in a liquid form, where there was no big difference in the content of trans-fatty acids and iodide value compared to the processed soybean oil of Example 4. Based on these results as well as results from Example 3, it has been found that it is preferable to add a nonselective nickel catalyst (N545) in an amount ranging from 0.0025 to 0.5%, more preferably 0.01 to 0.1%.

### <Example 6> Establishment of Optimal Reaction Conditions for the Production of Buttery Flavor by Regulating the Stirring Rate in the Hydrogen Addition Reaction

It has been found that, in the hydrogen addition reaction of the present invention, as the heating time for increasing the reaction temperature from an initial temperature ranging from 150 to 190°C at which hydrogen gas is injected to an optimal temperature ranging from 190 to 260°C (preferably 230°C) becomes longer, the production of buttery flavor takes place before the reaction temperature reaches the optimal temperature, resulting in a significantly decrease in the production of buttery flavor during the hydrogen addition reaction. It is possible to increase the reaction temperature to the optimal temperature within a short time in a low volume reactor, but the larger the volume of the reactor is, the longer the heating time for increasing the reaction temperature to the optimal temperature is. In such a case, the buttery flavor begins to be produced below the optimal temperature, which causes the decrease in the production of buttery flavor during the hydrogen addition reaction.

In order to prevent the decrease in the production of buttery flavor despite the long heating time for increasing the reaction temperature from the initial temperature at which hydrogen gas is injected to the optimal reaction temperature, the present invention carried out the hydrogen addition reaction as follows: until the reaction temperature reached an optimal temperature ranging from 190 to 260°C (preferably 230°C), the reaction mixture was subjected to extremely slow stirring by maintaining the stirring rate to 150 rpm or below, thereby minimizing the contact of edible oil and catalyst with hydrogen gas, resulting in the prevention of the production of buttery flavor. After the reaction temperature reached the optimal temperature ranging from 190 to 260°C (preferably 230°C), the stirring rate was then increased to the optimal condition of 300 rpm, and the hydrogen addition reaction was carried out to obtain a large quantity of buttery flavor despite the very long heating time for reaching the optimal temperature (Table 6). Accordingly, it has been found that, although hydrogen gas begins to be injected at room temperature while maintaining a stirring rate to 150 rpm or below, a reaction temperature was increased to an optimal temperature ranging from 190 to 260°C (preferably 230°C), followed by an increase in the stirring rate to an optimal condition ranging from 200 to 700 rpm (preferably 300 rpm), and the hydrogen addition reaction was carried out thereafter, it is possible to produce processed edible oil having a strong buttery flavor and a very low trans-fatty acid content similar or equal to those of processed edible oil prepared by injecting hydrogen gas at a temperature ranging from 150 to 190°C. These results suggest that it is possible to achieve the same effect at the initial injection temperature of hydrogen gas ranging from room temperature to 190°C by properly regulating the stirring rate in the hydrogen addition reaction.

Table 6

**[Table 6]**

| | Amount of Catalyst (%) | Reaction Time (min) | Content of Trans-fatty Acids (g/100 g oil) | Strength of Buttery Flavor¹⁾ | IV (Iodide Value) |
|---|---|---|---|---|---|
| Ex. 4 | 0.1 | 45 | 3.5 | +++++ | 125.4 |
| Ex. 6 | 0.1 | 45 | 3.7 | ++++++ | 128.5 |

| | | | | | |
|---|---|---|---|---|---|
| ¹⁾ Strength of buttery flavor: - absent, + very weak, ++ weak, +++ medium, ++++ slightly strong, +++++ strong, ++++++ very strong | | | | | |

### <Example 7> Improvement of Filtering Conditions by the Addition of a filter-aid Agent

In order to completely remove the catalyst from the processed edible oil after the hydrogen addition reaction is completed, processed soybean oil was prepared according to the hydrogen addition reaction as described in Example 4, in which hydrogen gas was injected for 45 min in the presence of a 0.1% nonselective catalyst (N545, Engelhard) under a pressure of 0.5 kg/cm² and subjected to primary filtration. The obtained processed soybean oil was mixed with a filter-aid agent, such as activated white clay, silica, silicic acid, activated carbon, and magnesium silicate, in the amount of 0.5% based on the weight of the processed soybean oil, stirred for 30 min, and filtered with a filter.

Accordingly, it was found that, when the processed edible oil was filtered without the filter auxiliary agent, the filtering step must be repeated several times so as to completely remove the catalyst. However, when the processed edible oil was filtered in the presence of a filter-aid agent, the catalyst was efficiently removed with only one additional filtration without affecting the strength of the buttery flavor contained in the processed edible oil.

### <Example 8> Effects of Omitting the Deguming and/or Neutralization Steps on the Production of Buttery Flavor

In order to examine the effect of omitting the deguming and/or neutralization step(s) from the method for preparing processed edible oil according to the present invention on the production of buttery flavor, the edible oil was subjected to the deguming or neutralization, and bleaching, and deodorization steps according to the same method as described in Example 1 except that the deguming or neutralization step was omitted. Then, the edible oil was subjected to the hydrogen addition reaction according to the same method as described in Example 4, in which hydrogen gas was injected for 45 min in the presence of a 0.1% nonselective catalyst (N545, Engelhard) under the pressure of 0.5 kg/cm², to obtain processed edible oil. The content of trans-fatty acids, the strength of the buttery flavor, and iodide values (IV) of the processed edible oil were analyzed, where the results are shown in Table 7 below.

Table 7

**[Table 7]**

| | Amount of Catalyst (%) | Reaction Time (min) | Content of Trans-Fatty Acids (g/100 g oil) | Strength of Buttery Flavor¹⁾ | IV (iodide value) |
|---|---|---|---|---|---|
| Ex. 4 | 0.1 | 45 | 3.5 | +++++ | 125.4 |
| Ex. 8 (Omission of deguming) | 0.1 | 45 | 3.2 | +++++ | 128.0 |
| Ex. 8 (Omission of neutralizat ion | 0.1 | 45 | 3.5 | +++++ | 126.6 |

| | | | | | |
|---|---|---|---|---|---|
| ¹⁾ Strength of buttery flavor: - absent, + very weak, ++ weak, +++ medium, ++++ slightly strong, +++++ strong, ++++++ very strong | | | | | |

As illustrated in Table 7, it has been found that, even if the deguming or neutralization step is omitted from the method of the present invention, it is possible to prepare processed edible oil having a trans-fatty acid content, buttery flavor strength and an iodide value identical or similar to those of the processed edible oil prepared by a method including all four steps.

### <Test Example 2> Increase in the Preference of Edible oil by the Addition of Processed Soybean Oil Containing a Highly Enriched Buttery Flavor

The processed soybean oil prepared according to the hydrogen addition reaction described in Example 4 (trans-fatty acid content: 4.8%, Table 4) was added to commercially available soybean oil and palm oil in the amount of 0.1, 1, 5, and 10%, respectively, based on the weight of the oil, and a sensory test on whether the oil has an enriched buttery flavor was carried out for 5 adult females and males. The results are shown in Table 8 below.

Table 8

**[Table 8]**

| | Amount or Processed Oil Added (%) | Sensory Test¹⁾ | Content of Trans-fatty Acids (g/100 g oil) |
|---|---|---|---|
| Soybean Oil | 0 | 1.0 | 1.4 |
| | 0.1 | 1.8 | 1.4 |
| | 1.0 | 2.8 | 1.4 |
| | 5.0 | 4.7 | 1.6 |
| | 10.0 | 5.0 | 1.9 |
| Palm Oil | 0 | 1.0 | 0.3 |
| | 0.1 | 1.7 | 0.3 |
| | 1.0 | 2.3 | 0.4 |
| | 5.0 | 4.3 | 0.6 |
| | 10.0 | 5.0 | 0.8 |
| Comp. Ex. 1 | 100.0 | 2.2 | 30.2 |

| | | | |
|---|---|---|---|
| ¹⁾ Sensory test - 1: there is no savory taste, 2: there is weak savory taste, 3: there is savory taste, 4: there is strong savory taste, 5: there is very strong savory taste | | | |

As shown in Table 8, when the processed soybean oil of the present invention was added to both soybean oil and palm oil in the amount of 0.1%, the subjects began to sense a buttery flavor and savory taste. When 1% of the processed soybean oil of the present invention was added, the subjects definitely sense a buttery flavor, and the addition of 5% or more led to the subjects sensing a strong buttery flavor. Even when 10% of the processed soybean oil of the present invention was added, the content of trans-fatty acids was no more than 1.9% at maximum, which, when converted into a unit diet prescribed by Nutrition Fact from the USDA Nutrient Database (13 g edible oil), merely amounted to 0.25 g, which was significantly below the trans-fatty acid level of 0.5 g per serving considered as "zero" (trans fat free). Therefore, it has been found that edible oil, to which the processed edible oil of the present invention is added in an amount of 10% or less, has a strong buttery flavor while containing a very low trans-fatty acid content sufficient to be labeled as trans-fatty acid free.

### <Preparation Example 1> Preparation of Potato Chips

It was examined whether there was an improvement in preference for potato chips prepared using the palm oil of Test Example 2 to which the processed edible oil of the present invention was added. The potatoes were sliced into 1 mm of thickness and then the potato slices were blanched in water at 60°C for 1 min, washed with cold water three times, and dried. The processed edible oil prepared by 60 min of hydrogen addition reaction in Example 4 was added to the palm oil in the amount of 2% based on the weight of the palm oil and heated to 190°C. After that, the sliced potato was fried in the palm oil for 105 sec to prepare potato chips. For the control, potato chips were prepared using palm oil that did not contain the processed soybean oil of the present invention. A sensory test for the prepared potato chips was conducted for 5 adult males and females, where the results are shown in Table 9 below.

Table 9

**[Table 9]**

| Type of Food | Amount of Processed Edible Oil Added (%) | Sensory Test¹⁾ | Remarks |
|---|---|---|---|
| Potato Chips | 0 | 1.7 | Taste is plain. |
| | 2.0 | 4.0 | A savory taste is maintained in the mouth for a long time. |
| Corn Chips | 0 | 1.6 | A savory taste rapidly disappears. |
| | 2.0 | 3.9 | A savory taste is maintained in the mouth for a long time. |
| Fried Chicken (wings) | 0 | 2.6 | The taste is plain and a savory taste rapidly disappears. |
| | 2.0 | 4.4 | A savory taste is maintained in the mouth for a long time. |
| | 4.0 | 5.0 | A savory taste is maintained in the mouth for a long time. |
| Coated Fried Chicken | 0 | 2.2 | A savory taste rapidly disappears. |
| | 4.0 | 4.8 | The taste is very savory and tasty. |

| | | | |
|---|---|---|---|
| ¹⁾Sensory test - 1: there is no savory taste, 2: there is weak savory taste, 3: there is savory taste, 4: there is strong savory taste, 5: there is very strong savory taste | | | |

As can be seen in Table 9, when compared to the potato chips in the control group (1.7) exhibiting a plain taste, the potato chips prepared using the palm oil containing the processed soybean oil of the present invention (4.0) exhibited an increased buttery flavor and savory taste, which were maintained in the mouth for a long time.

### <Preparation Example 2> Preparation of Fried Corn Chips

It was examined whether there was an improvement in preference for corn chips prepared using the palm oil of Test Example 2 to which the processed edible oil of the present invention was added. 500 g of corn grits (prepared by roughly pulverizing corn into particles of 1 mm or less in size) were mixed with 500 mℓ of water and subjected to steaming at 121°C for 30 min. The steamed corn grits were cooled and passed through a rolling mill several times to obtain thin sheets of corn grits dough having a thickness of 1 mm, followed by cutting the thin sheets of corn grits dough into 2x2 cm in size, and dried at room temperature to make corn chip bases. The processed edible oil prepared by 60 min of hydrogen addition reaction as described in Example 4 was added to the palm oil in an amount of 2% based on the weight of the palm oil and heated to 190°C. After that, the dried corn chip bases were fried in the palm oil for 30 sec to prepare corn chips. For the control, corn chips were prepared by using the palm oil that did not contain the processed soybean oil of the present invention.

The results from the sensory test show, as illustrated in Table 9, that while the savory taste of the fried corn chips in the control group (1.6) quickly disappeared, the fried corn chips prepared by using the palm oil containing the processed soybean oil of the present invention (3.9) exhibited an increased buttery flavor and savory taste, which were maintained in the mouth for a long time.

### <Preparation Example 3> Preparation of Fried Chicken

It was examined whether there was an improvement in preference for fried chicken prepared by using the palm oil of Test Example 2 to which the processed edible oil of the present invention was added. Commercially available chicken wings that were sliced into a proper size were used. The processed edible oil prepared by 60 min of hydrogen addition reaction as described in Example 4 was added to the palm oil in the amount of 2% and 4%, respectively, based on the weight of the palm oil and heated to 190°C. After that, the chicken wings were fried in the palm oil containing the processed soybean oil (2 or 4%) for 6 min and cooled down, followed by frying for 3 min to prepare the fried chicken. For the control, fried chicken was prepared by using the palm oil that did not contain the processed soybean oil of the present invention.

The results from the sensory test show, as illustrated in Table 9, that while the savory taste of the fried chicken in the control group (2.6) quickly disappeared, the fried chicken prepared by using the palm oil containing the processed soybean oil of the present invention (4.4) exhibited an increased buttery flavor and savory taste, which were maintained in the mouth for a long time. The fried chicken prepared by using the palm oil to which 4% of processed soybean oil was added (5.0) exhibited a more stronger buttery flavor and savory taste than that prepared by using the palm oil to which 2% of processed soybean oil was added (4.4), but it was found that the addition of 2% of the processed edible oil was sufficient for improving the preference of the fried chicken.

### <Preparation Example 4> Preparation of Coated Fried Chicken

It was examined whether there was an improvement in preference for coated fried chicken prepared by using the palm oil of Test Example 2 to which the processed edible oil of the present invention was added. Commercially available whole chickens were purchased, cut into a proper size, seasoned with a proper amount of salt. A batter was prepared by adding a proper amount of water, pepper, salt, egg, and the like to the powder mix for frying according to the manufacturer's instruction, and the chickens were coated with the batter. The processed edible oil prepared by 60 min of hydrogen addition reaction as described in Example 4 was added to the palm oil in an amount of 4% based on the weight of the palm oil and heated to 190°C. After that, the coated chickens were fried in the palm oil containing the processed soybean oil (4%) for 10 min to prepare coated fried chickens. For the control, coated fried chicken was prepared by using the palm oil that did not contain the processed soybean oil of the present invention.

The results from the sensory test show, as illustrated in Table 9, that the savory taste of the coated fried chicken in the control group (2.2) quickly disappeared, the coated fried chicken prepared by using the palm oil containing the processed soybean oil of the present invention (4.8) exhibited an increased buttery flavor and savory taste, which were maintained in the mouth for a long time.

## Claims

1. A method for preparing processed edible oil having an enriched buttery flavor with a low content of trans-fatty acids, which comprises the steps of deodorizing edible oil under reduced pressure in the course of refining the edible oil followed by a hydrogen addition reaction in the presence of a catalyst and hydrogen gas under the elevated temperature.

2. The method according to Claim 1, wherein the edible oil is treated with one or more steps selected from the group consisting of: deguming, neutralizing and bleaching, prior to the deodorization step.

3. The method according to Claim 1, wherein the hydrogen addition reaction is carried out by heating a reaction vessel while stirring at a rate of 50 to 700 rpm in the presence of a catalyst; injecting hydrogen gas into the reaction vessel when reaction temperature reaches 100 to 290°C; and carrying out the hydrogen addition reaction at the reaction temperature for 7 to 90 min while maintaining the same stirring rate.

4. The method according to Claim 3, wherein the hydrogen addition reaction is carried out by injecting hydrogen gas before reaction temperature reaches an optimal temperature and increasing the reaction temperature to the optimal temperature during the hydrogen addition reaction.

5. The method according to Claim 4, wherein the hydrogen addition reaction is carried out by heating the deodorized edible oil under reduced pressure in the presence of a catalyst while stirring at a rate of 300 to 700 rpm; injecting hydrogen gas when reaction temperature reaches 150 to 190°C while maintaining the same stirring rate; rapidly increasing the reaction temperature to 190 to 260°C within 5 to 10 min after the injection of hydrogen gas; and carrying out the hydrogen addition reaction at the same temperature for 7 to 90 min.

6. The method according to Claim 3, wherein the hydrogen addition reaction is carried out by injecting hydrogen gas while stirring at a relatively low rate before reaction temperature reaches an optimal temperature; increasing the reaction temperature to the optimal temperature; and increasing the stirring rate to an optimal rate during the hydrogen addition reaction.

7. The method according to Claim 6, wherein the hydrogen addition reaction is carried out by heating the deodorized edible oil under reduced pressure in the presence of a catalyst while stirring at a rate of 50 to 150 rpm; injecting hydrogen gas when reaction temperature reaches room temperature to 190°C while maintaining the same stirring rate; increasing the stirring rate to 200 to 700 rpm when the reaction temperature reaches 190 to 260°C; and carrying out the hydrogen addition reaction at the same temperature and stirring rate for 7 to 90 min.

8. The method according to any one of Claims 1 to 7, wherein the catalyst is selected from the group consisting of selective and nonselective nickel catalysts, copper catalysts, platinum catalysts, palladium catalysts, and ruthenium catalysts.

9. The method according to Claim 8, wherein the catalyst is added in an amount of 0.0025 to 0.5% based on the weight of the deodorized edible oil.

10. The method according to any one of Claims 1 to 7, wherein the catalyst is removed after the hydrogen addition reaction is completed by mixing the processed edible oil with one or more filter-aid agents selected from the group consisting of active white clay, active carbon, silica, silicic acid, and magnesium silicate, and filtering the mixture with a filter.

11. The method according to any one of Claims 1 to 7, wherein the hydrogen gas is injected at a pressure ranging from 0.25 to 2.5 kg/cm².

12. The method according to Claim 1, wherein the raw edible oil is selected from the group consisting of soybean oil, corn oil, cottonseed oil, sesame oil, perilla oil, canola oil, sunflower seed oil, rice bran oil, olive oil, rapeseed oil, antioxidant- containing edible oil, low linolenic acid-containing soybean oil, and a mixture thereof.

13. Processed edible oil obtainable by the method according to Claim 1 having an enriched buttery flavor with a very low content of trans-fatty acids.

14. The processed edible oil according to Claim 13, wherein the content of trans- fatty acids is in the range of from 1.5 to 20.4%.

15. A method of providing an enriched buttery flavor to food or feed products without causing an increase in trans-fatty acid content and thereby enhancing the taste of the food or feed products comprising adding the processed edible oil according to Claim 13.

16. The method according to Claim 15, wherein the processed edible oil is added in the amount of 0.1 to 10% based on the weight of food or feed products.

## Patentansprüche

1. Verfahren zur Herstellung von verarbeitetem Speiseöl, das ein angereichertes butterartiges Aroma aufweist, mit einem niedrigen Gehalt an trans-Fettsäuren, das die Schritte des Desodorierens des Speiseöls unter reduziertem Druck im Verlauf der Raffinierung des Speiseöls, gefolgt von einer Wasserstoff-Additionsreaktion in der Gegenwart eines Katalysators und von Wasserstoffgas unter der erhöhten Temperatur umfasst.

2. Verfahren nach Anspruch 1, wobei das Speiseöl vor dem Desodorierungsschritt mit einem oder mehreren Schritten ausgewählt aus der Gruppe bestehend aus: Degummieren, Neutralisieren und Bleichen behandelt wird.

3. Verfahren nach Anspruch 1, wobei die Wasserstoff-Additionsreaktion durch Erhitzen eines Reaktionsgefäßes unter Rühren bei einer Geschwindigkeit von 50 bis 700 Umdrehungen pro Minute in Gegenwart eines Katalysators durchgeführt wird; Injizieren von Wasserstoffgas in das Reaktionsgefäß, wenn die Reaktionstemperatur 100 bis 290°C erreicht; und Durchführen der Wasserstoff-Additionsreaktion bei der Reaktionstemperatur für 7 bis 90 Minuten, während die gleiche Rührgeschwindigkeit beibehalten wird.

4. Verfahren nach Anspruch 3, wobei die Wasserstoff-Additionsreaktion durch Injizieren von Wasserstoffgas durchgeführt wird, bevor die Reaktionstemperatur eine optimale Temperatur erreicht hat, und Erhöhen der Reaktionstemperatur auf die optimale Temperatur während der Wasserstoff-Additionsreaktion.

5. Verfahren nach Anspruch 4, wobei die Wasserstoff-Additionsreaktion durch Erhitzen des desodorierten Speiseöls unter reduziertem Druck in Gegenwart eines Katalysators unter Rühren bei einer Geschwindigkeit von 300 bis 700 Umdrehungen pro Minute durchgeführt wird; Injizieren von Wasserstoffgas, wenn die Reaktionstemperatur 150 bis 190°C erreicht, während die gleiche Rührgeschwindigkeit beibehalten wird; schnelles Erhöhen der Reaktionstemperatur auf 190 bis 260°C innerhalb von 5 bis 10 min nach der Injektion von Wasserstoffgas; und Durchführen der Wasserstoff-Additionsreaktion bei der gleichen Temperatur für 7 bis 90 Minuten.

6. Verfahren nach Anspruch 3, wobei die Wasserstoff-Additionsreaktion durch Injizieren von Wasserstoffgas unter Rühren bei einer relativ niedrigen Geschwindigkeit durchgeführt wird, bevor die Reaktionstemperatur eine optimale Temperatur erreicht; Erhöhen der Reaktionstemperatur auf die optimale Temperatur; und Erhöhen der Rührgeschwindigkeit auf eine optimale Geschwindigkeit während der Wasserstoff-Additionsreaktion.

7. Verfahren nach Anspruch 6, wobei die Wasserstoff-Additionsreaktion durchgeführt wird durch Erhitzen des desodorisierten Speiseöls unter reduziertem Druck in Gegenwart eines Katalysators unter Rühren bei einer Geschwindigkeit von 50 bis 150 Umdrehungen pro Minute; Injizieren von Wasserstoffgas, wenn die Reaktionstemperatur Raumtemperatur bis 190°C erreicht, während die gleiche Rührgeschwindigkeit beibehalten wird; Erhöhen der Rührgeschwindigkeit auf 200 bis 700 Umdrehungen pro Minute, wenn die Reaktionstemperatur 190 bis 260°C erreicht; und Durchführen der Wasserstoff-Additionsreaktion bei der gleichen Temperatur und Rührgeschwindigkeit für 7 bis 90 Minuten.

8. Verfahren nach einem der Ansprüche 1 bis 7, wobei der Katalysator ausgewählt ist aus der Gruppe bestehend aus selektiven und nicht-selektiven Nickel-Katalysatoren, Kupfer-Katalysatoren, Platin-Katalysatoren, Palladium-Katalysatoren und Ruthenium-Katalysatoren.

9. Verfahren nach Anspruch 8, wobei der Katalysator in einer Menge von 0,0025 bis 0,5% bezogen auf das Gewicht des desodorierten Speiseöls zugegeben wird.

10. Verfahren nach einem der Ansprüche 1 bis 7, wobei der Katalysator, nachdem die Wasserstoff-Additionsreaktion abgeschlossen ist, durch Mischen des verarbeiteten Speiseöls mit einem oder mehreren Filterhilfsstoffen ausgewählt aus der Gruppe bestehend aus aktivem weißem Ton, Aktivkohle, Kieselerde, Kieselsäure und Magnesiumsilicat, und durch Filtrieren der Mischung mit einem Filter entfernt wird.

11. Verfahren nach einem der Ansprüche 1 bis 7, wobei das Wasserstoffgas bei einem Druck im Bereich von 0,25 bis 2,5 kg / cm² injiziert wird.

12. Verfahren nach Anspruch 1, wobei das rohe Speiseöl ausgewählt ist aus der Gruppe bestehend aus Sojabohnenöl, Maisöl, Baumwollsamenöl, Sesamöl, Perillaöl, Rapsöl, Sonnenblumensamenöl, Reiskleieöl, Olivenöl, Rapsöl, Antioxidans enthaltendes Speiseöl, Sojabohnenöl mit niedrigem Linolensäuregehalt und einer Mischung davon.

13. Verarbeitetes Speiseöl, erhältlich durch das Verfahren nach Anspruch 1, das ein angereichertes butterartiges Aroma aufweist, mit einem sehr niedrigen Gehalt an trans-Fettsäuren.

14. Verarbeitetes Speiseöl nach Anspruch 13, wobei der Gehalt an trans-Fettsäuren im Bereich von 1,5 bis 20,4% liegt.

15. Verfahren zum Bereitstellen eines angereicherten butterartigen Aromas an Nahrungsmittel oder Futtermittelerzeugnissen, ohne eine Erhöhung des trans-Fettsäuregehalts hervorzurufen, und dadurch den Geschmack der Nahrungsmittel- oder Futtermittelerzeugnisse zu verbessern, umfassend die Zugabe des verarbeiteten Speiseöls nach Anspruch 13.

16. Verfahren nach Anspruch 15, wobei das verarbeitete Speiseöl in einer Menge von 0,1 bis 10% bezogen auf das Gewicht der Nahrungsmittel- oder Futtermittelerzeugnisse zugegeben wird.

## Revendications

1. Procédé destiné à préparer une huile alimentaire traitée qui présente une flaveur de beurre enrichie avec une faible teneur en acides gras trans, qui comprend une étape consistant à désodoriser l'huile alimentaire sous une pression réduite au cours d'une étape consistant à raffiner l'huile alimentaire, suivie d'une réaction d'ajout d'hydrogène en présence d'un catalyseur et d'hydrogène gazeux sous une température élevée.

2. Procédé selon la revendication 1, dans lequel l'huile alimentaire est traitée avec une ou plusieurs étapes sélectionnées dans le groupe constitué par les étapes consistant à : dégommer, neutraliser et blanchir, avant l'étape de désodorisation.

3. Procédé selon la revendication 1, dans lequel la réaction d'ajout d'hydrogène est exécutée en chauffant un récipient à réaction tout en brassant à une vitesse comprise entre 50 tr/mn et 700 tr/mn en présence d'un catalyseur ; injecter de l'hydrogène gazeux dans le récipient à réaction lorsque la température de réaction atteint une valeur comprise entre 100 °C et 290 °C ; et exécuter la réaction d'ajout d'hydrogène à la température de réaction pendant une durée comprise entre 7 mn et 90 mn tout en maintenant la même vitesse de brassage.

4. Procédé selon la revendication 3, dans lequel la réaction d'ajout d'hydrogène est exécutée en injectant de l'hydrogène gazeux avant que la température de réaction n'atteigne une température optimale, et en accroissant la température de réaction à la température optimale au cours de la réaction d'ajout d'hydrogène.

5. Procédé selon la revendication 4, dans lequel la réaction d'ajout d'hydrogène est exécutée en chauffant l'huile alimentaire désodorisée sous une pression réduite en présence d'un catalyseur tout en remuant à une vitesse comprise entre 300 tr/mn et 700 tr/mn ; injecter de l'hydrogène gazeux lorsque la température de réaction atteint une valeur comprise entre 150 °C et 190 °C tout en maintenant la même vitesse de brassage ; accroître rapidement la température de réaction jusqu'à une valeur comprise entre 190 °C et 260 °C à un instant qui se situe entre 5 mn et 10 mn après l'injection d'hydrogène gazeux ; et exécuter la réaction d'ajout d'hydrogène à la même température pendant une durée comprise entre 7 mn et 90 mn.

6. Procédé selon la revendication 3, dans lequel la réaction d'ajout d'hydrogène est exécutée en injectant de l'hydrogène gazeux tout en brassant à une vitesse relativement faible avant que la température de réaction n'atteigne une température optimale ; accroître la température de réaction jusqu'à la température optimale ; et accroître la vitesse de brassage jusqu'à une vitesse optimale au cours de la réaction d'ajout d'hydrogène.

7. Procédé selon la revendication 6, dans lequel la réaction d'ajout d'hydrogène est exécutée en chauffant l'huile alimentaire désodorisée sous une pression réduite en présence d'un catalyseur tout en remuant à une vitesse comprise entre 50 tr/mn et 150 tr/mn ; injecter de l'hydrogène gazeux lorsque la température de réaction atteint une valeur comprise entre la température ambiante et 190 °C tout en maintenant la même vitesse de brassage ; accroître la vitesse de brassage jusqu'à une valeur comprise entre 200 tr/mn et 700 tr/mn lorsque la température de réaction atteint une valeur comprise entre 190 °C et 260 °C ; et exécuter la réaction d'ajout d'hydrogène à la même température et à la même vitesse de brassage pendant une durée comprise entre 7 mn et 90 mn.

8. Procédé selon l'une quelconque des revendications 1 à 7, dans lequel le catalyseur est sélectionné dans le groupe constitué par des catalyseurs au nickel sélectifs et non sélectifs, des catalyseurs au cuivre, des catalyseurs au platine, des catalyseurs au palladium, et des catalyseurs au ruthénium.

9. Procédé selon la revendication 8, dans lequel le catalyseur est ajouté en une quantité comprise entre 0,0025 % et 0,5 % sur la base du poids d'huile alimentaire désodorisée.

10. Procédé selon l'une quelconque des revendications 1 à 7, dans lequel le catalyseur est éliminé à la fin de la réaction d'ajout d'hydrogène en mélangeant l'huile alimentaire traitée à un ou plusieurs agents adjuvants de filtration sélectionnés dans le groupe constitué par de l'argile blanche active, du charbon actif, de la silice, de l'acide silicique, et du silicate de magnésium, et en filtrant le mélange avec un filtre.

11. Procédé selon l'une quelconque des revendications 1 à 7, dans lequel l'hydrogène gazeux est injecté à une pression qui est comprise entre 0,25 kg/cm² et 2,5 kg/cm².

12. Procédé selon la revendication 1, dans lequel l'huile alimentaire brute est sélectionnée dans le groupe constitué par l'huile de soja, l'huile de maïs, l'huile de coton, l'huile de sésame, l'huile de périlla, l'huile de canola, l'huile de tournesol, l'huile de riz, l'huile d'olive, l'huile de colza, une huile alimentaire qui contient un antioxydant, une huile de soja qui présente une faible teneur en acide linolénique, et un mélange de celles-ci.

13. Huile alimentaire traitée qu'il est possible d'obtenir grâce au procédé selon la revendication 1, qui présente une flaveur de beurre enrichie avec une très faible teneur en acides gras trans.

14. Huile alimentaire traitée selon la revendication 13, dans laquelle la teneur en acides gras trans se situe dans une plage comprise entre 1,5 % et 20,4 %.

15. Procédé destiné à fournir une flaveur de beurre enrichie à des produits d'alimentation ou de nourriture sans provoquer un accroissement de la teneur en acides gras trans, et en augmentant de ce fait le goût de produits d'alimentation ou de nourriture qui comprennent un ajout d'huile alimentaire traitée selon la revendication 13.

16. Procédé selon la revendication 15, dans lequel l'huile alimentaire traitée est ajoutée en une quantité comprise entre 0,1 % et 10 % sur la base du poids des produits d'alimentation ou de nourriture.
